# EUROPEAN PATENT SPECIFICATION

(11) **EP 0 821 051 B1**
(45) Date of publication and mention of the grant of the patent: **17.05.2000**
(21) Application number: 97112641.2
(22) Date of filing: 23.07.1997
(51) Int. Cl.: C09K 19/42, C09K 19/46

(54) **Liquid crystal composition and liquid crystal display element**
Flüssigkristallzusammensetzung und Flüssigkristallanzeigeelement
Composition liquide cristalline et élément d'affichage à cristaux liquides

(30) Priority: 23.07.1996 JP 19308496
(43) Date of publication of application: 28.01.1998
(73) Proprietor: Chisso Corporation, Osaka-shi Osaka 530-0055 (JP)
(72) Inventor: Kawano, Katsuyuki, Ichihara-Shi, Chiba-Ken, 290 (JP); Murashiro, Katsuyuki, Room No.B-226, Chiba-ken 290 (JP); Takeshita, Fusayuki, Kimitsu-Shi, Chiba-Ken, 299-11 (JP); Matsushita, Tetsuya, Sodegaura-Shi, Chiba-Ken, 299-02 (JP); Nakagawa, Etsuo, Ichihara-Shi, Chiba-Ken, 290 (JP)
(74) Representative: Hansen, Bernd, Dr. Dipl.-Chem.

(56) References cited:
- EP-A- 0 325 796
- EP-A- 0 345 013
- EP-A- 0 377 469
- EP-A- 0 581 272
- EP-A- 0 717 093
- EP-A- 0 776 958
- WO-A-91/19772

## Description

This invention relates to a nematic liquid crystal composition comprising at least one chiral additive and a liquid crystal display element provided in a closed cell formed by two substrates containing transparent electrodes, and in particular a liquid crystal composition useful for super twisted birefringent nematic (STN) system and a liquid crystal display element using the liquid crystal composition.

### Background of the invention

There have been proposed various display systems for liquid crystal display (LCD) such as twisted nematic system, super twisted birefringent nematic system (STN) and active matrix system (AM-LCD) and practically applied. Among them, super twisted birefringent nematic systems (STN) proposed by T. J. Scheffer et al., (Appl. Phy. Lett., 45(10), 1021 (1984)) wherein the orientation of the liquid crystal molecules in the upper and lower substrates is twisted by 180 to 270° have been used as LCD for personal computers, word processors and the like. There is a need for further improvement of various properties of the systems.

The following properties are required for a liquid crystal composition used for the STN liquid crystal display element.
(1) high steepness of voltage-transmittance characteristic in order to obtain high contrast of the liquid crystal display element;
(2) high phase transition temperature (clearing point) of nematic-isotropy phase in order to lower the coloring due to the temperature dependency of refractive anisotropy (Δn);
(3) low viscosity (η) in order to make a response time as shorter as possible; and
(4) thin cell thickness (d) in order to make a response time as shorter as possible since the response time is proportional to the cell thickness, and thus, large refractive anisotropy (Δn).

Among them, the improvement of the above properties (1) and (4) have recently become more important because of high desire for colorization and animation. Although, various liquid crystal compositions have been proposed, there is still a need for liquid crystal compositions having improved properties.

### Summary of the invention

An object of the present invention is to provide a liquid crystal composition having various properties required for the STN display systems, in particular, a liquid crystal composition having excellent voltage-transmittance characteristic (high steepness) suitable for colorization and a liquid crystal composition having low viscosity and high Δn suitable for a high speed response.

The inventors of the present invention have studied various liquid crystal compositions using various liquid crystal compounds to achieve the object and found that the object can be attained by the use of the liquid crystal composition of the present invention, in particular, in the STN display element.

The present invention provides a liquid crystal composition which comprises a first component comprising at least one compound selected from the group consisting of compounds of formulas (I-a) to (I-f), a second component comprising at least one compound of formula (II) and a third component comprising at least one compound selected from the group consisting of compounds of formulas (III-a) to (III-c). 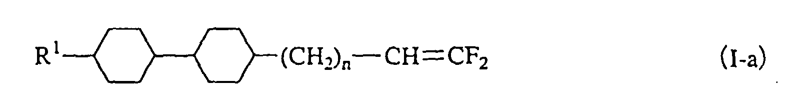 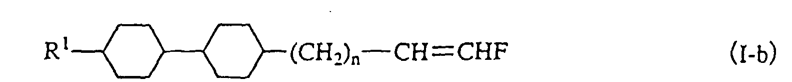 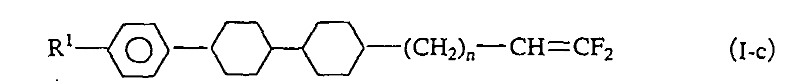 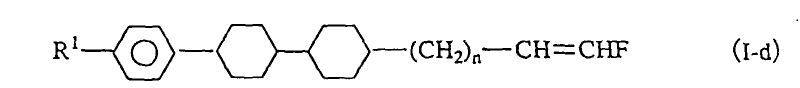 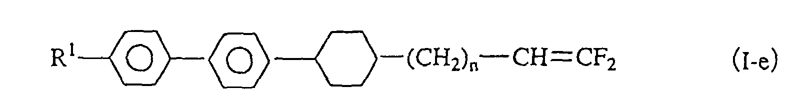 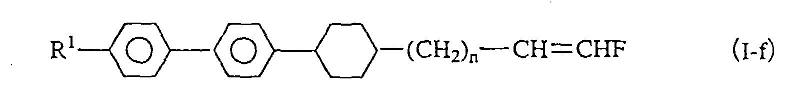 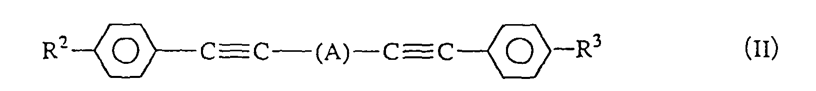 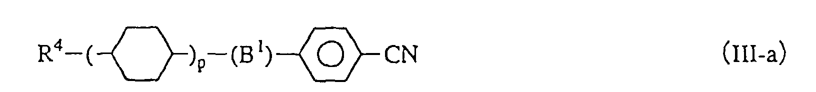 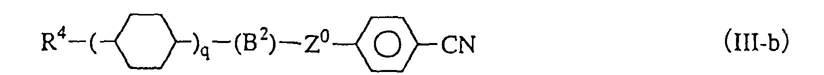 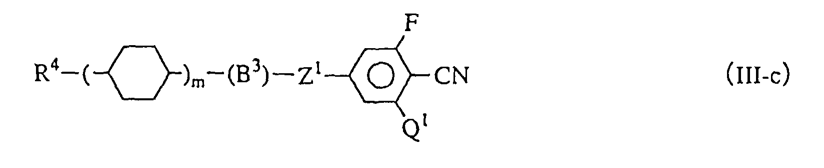 wherein
R¹ is an alkyl group having 1 to 10 carbon atoms; one or two or more methylene groups (-CH₂-) which are not vicinal in the alkyl group may be substituted by oxygen atom (-O-) and/or -CH=CH-; and n is an integer of 0 to 20;
R² and R³ are independently alkyl groups having 1 to 10 carbon atoms; one or two or more methylene groups (-CH₂-) which are not vicinal in the alkyl groups may be substituted by oxygen atom (-O-) and/or -CH=CH-; and A is 1,4-phenylene group whose hydrogen atom (s) in the lateral position may be substituted by fluorine atom(s);
R⁴ is an alkyl group having 1 to 10 carbon atoms; one or two or more methylene groups (-CH₂-) which are not vicinal in the alkyl group may be substituted by oxygen atom (-O-) and/or -CH=CH-;
Z⁰ is -COO- or -CH₂CH₂-, Z¹ is -CH₂CH₂-, -COO- or a single bond;
Q¹ is hydrogen or fluorine atom; B¹ is 1,4-cyclohexylene, 1,4-phenylene or 1,3-dioxane-2,5-diyl; B² and B³ are independently 1,4-cyclohexylene or 1,4-phenylene group whose hydrogen atom(s) in the lateral position may be substituted by fluorine atom(s); p, q and m are independently 0 or 1.

Preferably, the first component is comprised in the amount of 3 to 60% by weight, the second component in the amount of 3 to 30% by weight and the third component in the amount of 5 to 70% by weight, based on the total weight of the composition of the present invention.

Further the present invention provides a liquid crystal composition which further comprises a fourth component comprising at least one compound selected from the group consisting of compounds of formulas (IV), (V), (VI-a) and (VI-b):

R⁵ - (B⁴) - Z² - (C¹) - R⁶ (IV)

wherein R⁵ and R⁶ are independently alkyl groups having 1 to 10 carbon atoms; one or two or more methylene groups (-CH₂-) which are not vicinal in the alkyl groups may be substituted by oxygen atom (-O-) and/or -CH=CH-; B⁴ is 1,4- cyclohexylene, pyrimidine-2,5-diyl or 1,4-phenylene group; C¹ is 1,4-cyclohexylene or 1,4-phenylene group; Z² is -C ≡ C-, -COO-, -CH₂CH₂-, -CH=CH-, -CF=CF- or a single bond;

R⁷ - (D) - Z³ - (E) - Z⁴ - (G) - R⁸ (V)

wherein R⁷ is an alkyl group having 1 to 10 carbon atoms; one or two or more methylene groups (-CH₂-) which are not vicinal in the alkyl group may be substituted by oxygen atom (-O-) and/or -CH=CH-; R⁸ is an alkyl, alkoxy or alkoxymethyl group having 1 to 10 carbon atoms; D is 1,4-cyclohexylene or pyrimidine-2,5-diyl group; E is 1,4-cyclohexylene or 1,4-phenylene group whose hydrogen atom(s) in the lateral position may be substituted by fluorine atom(s); G is 1,4-cyclohexylene or 1,4-phenylene group; Z³ is -CH₂CH₂- or a single bond; Z⁴ is -C≡C-, -COO-, -CH=CH- or a single bond; 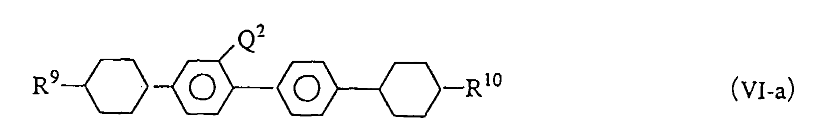 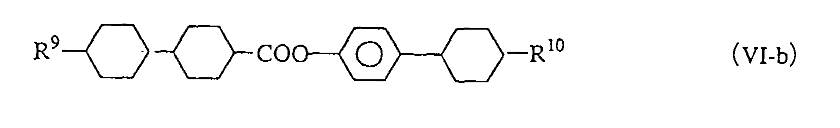 wherein R⁹ is an alkyl group having 1 to 10 carbon atoms; one or two or more methylene groups (-CH₂-) which are not vicinal in the alkyl group may be substituted by oxygen atom (-O-) and/or -CH=CH-; R¹⁰ is an alkyl, alkoxy or alkoxymethyl group having 1 to 10 carbon atoms; and Q² is hydrogen or fluorine atom.

Preferably, the fourth component is comprised in the amount of 0 to 60% by weight based on the total weight of the composition of the present invention.

Moreover, the present invention provides a liquid crystal composition which further comprises a fifth component comprising at least one compound selected from the group consisting of compounds of formulas (VII) and (VIII). 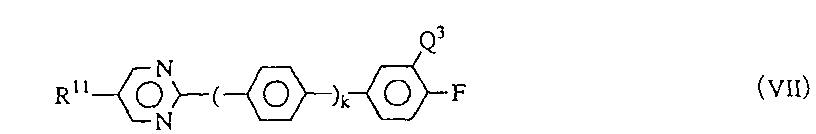 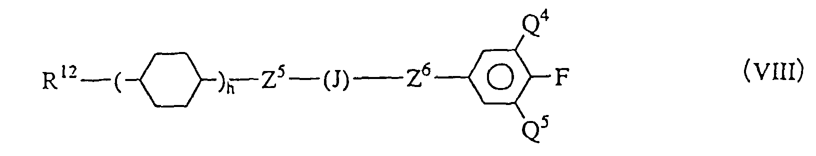 wherein R¹¹ is an alkyl group having 1 to 10 carbon atoms; Q³ is hydrogen or fluorine atom; k is 0 or 1; R¹² is an alkyl group having 1 to 10 carbon atoms; J is 1, 4-cyclohexylene or 1,4-phenylene group; Q⁴ and Q⁵ are independently hydrogen or fluorine atom; Z⁵ and Z⁶ are independently -COO- or single bond; and h is 0, 1 or 2.

Preferably, the fifth component is comprised in the amount of 0 to 50% by weight based on the total weight of the composition of the present invention.

Furthermore, the present invention provides a liquid crystal display element wherein the crystal composition of any one of those mentioned above is used.

### Preferred embodiment of the invention

The liquid crystal compound which constitutes the liquid crystal composition of the present invention will be described below.

Preferred examples of the compounds of the formulas (I-a) to (I-f) are shown below. R in the formulas represents an alkyl group.

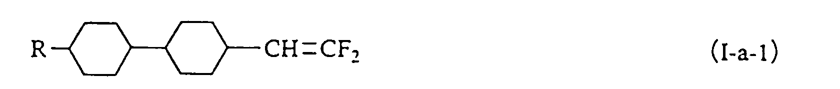

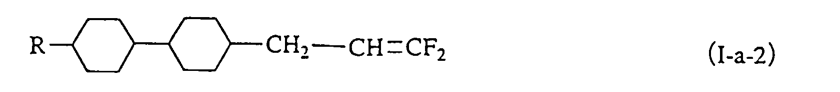

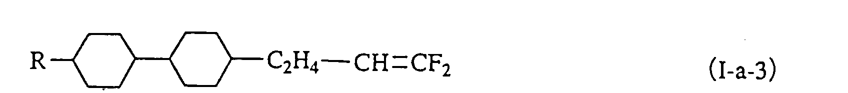

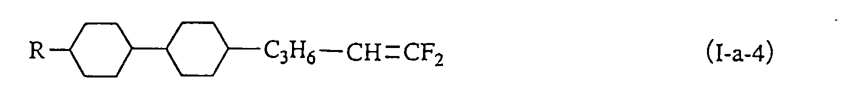

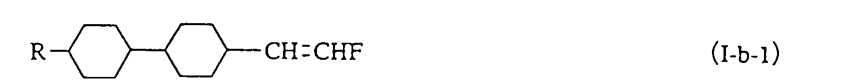

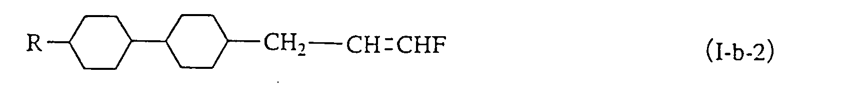

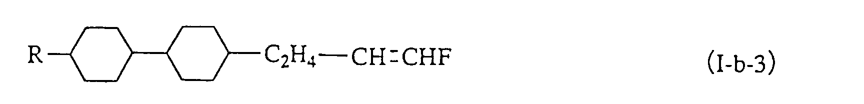

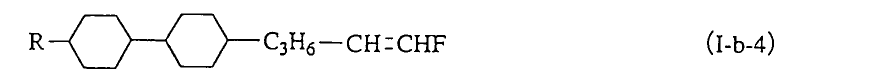

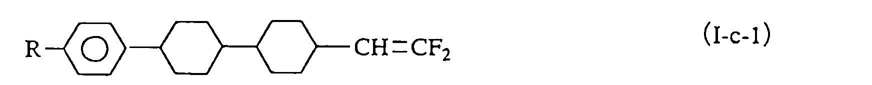

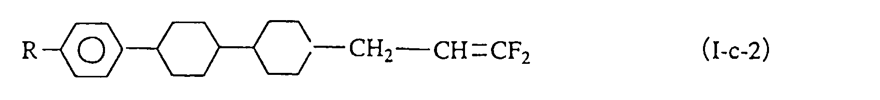

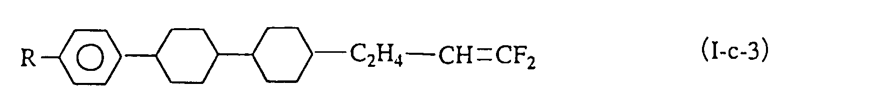

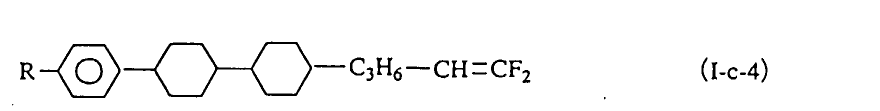

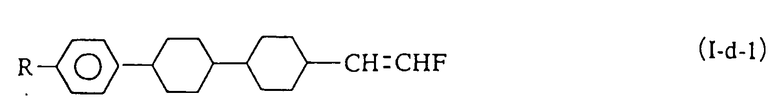

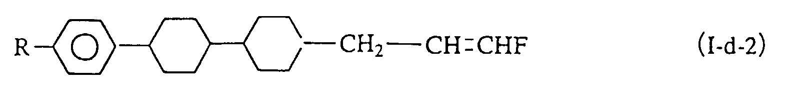

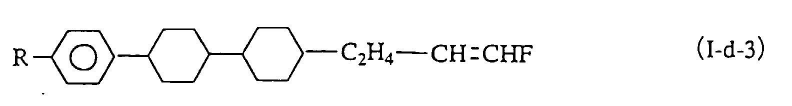

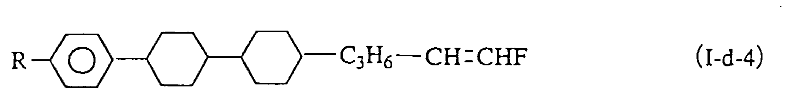

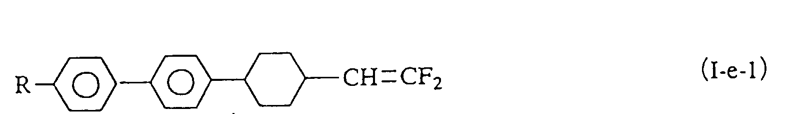

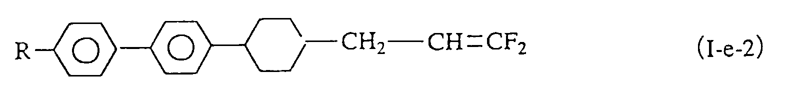

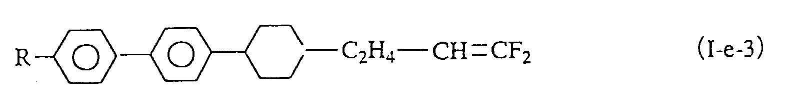

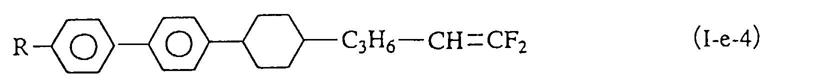

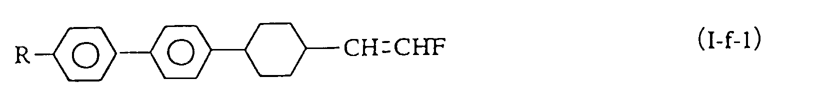

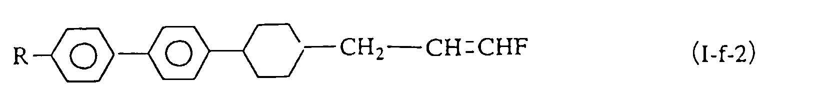

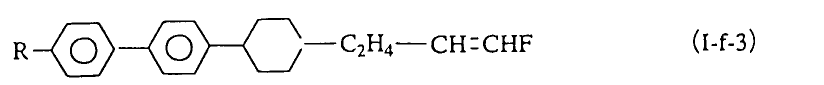

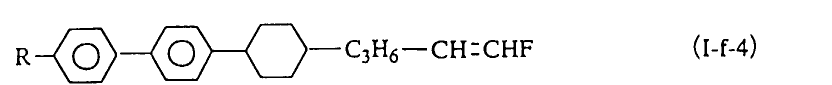

These compounds are disclosed in JP-A-1-175947, JP-A-1-308239 (EP 325796 B), and JP-A-2-184642 (EP 377469 B1). The dicyclic compounds have weak positive dielectric anisotropy and small refractive anisotropy (Δn) and they are used mainly for lowering viscosity and improving steepness. The tricyclic compounds have weak positive dielectric anisotropy and they are used mainly for broadening the nematic phase range or lowering viscosity and improving steepness.

Preferred examples of the compounds of the formula (II) which are the second component of the present invention are shown below. R and R' in the formulas independently represent an alkyl group.

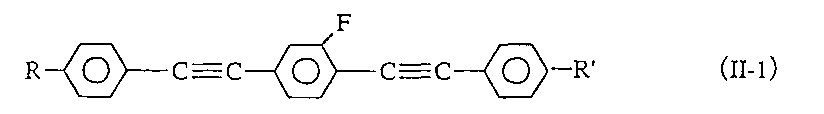

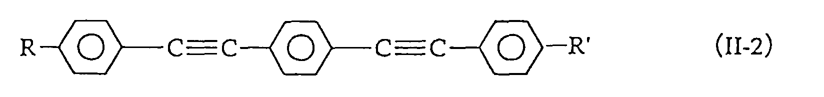

These compounds have weak positive dielectric anisotropy and refractive anisotropy (Δn) of about 0.40 to 0.44 and they are used mainly for increasing Δn or lowering viscosity and broadening the nematic phase range.

Preferred examples of the compounds of the formulas (III-a), (III-b) and (III-c) which are the third component of the present invention are shown below. R and R' in the formulas independently represent an alkyl group. One or two or more methylene groups (-CH₂-) which are not vicinal in the alkyl group may be substituted by -CH=CH-.

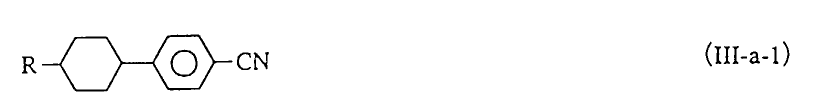

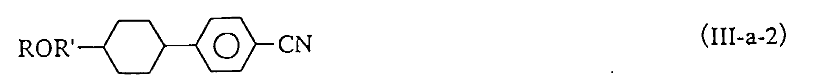

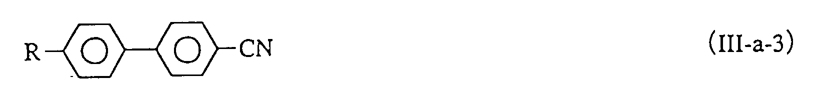

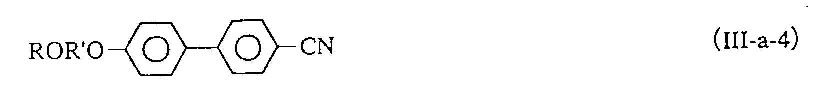

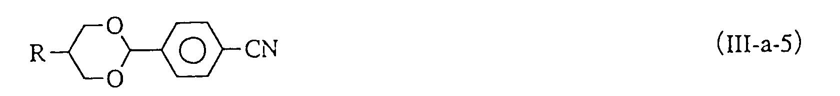

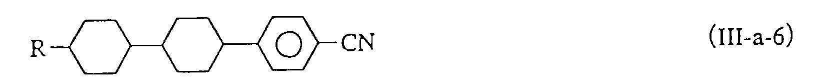

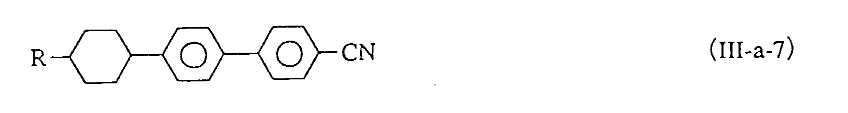

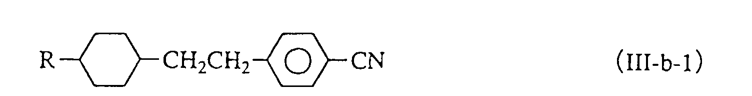

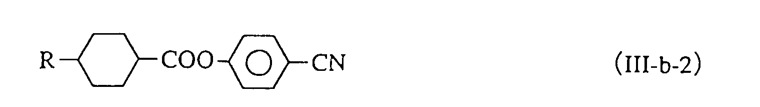

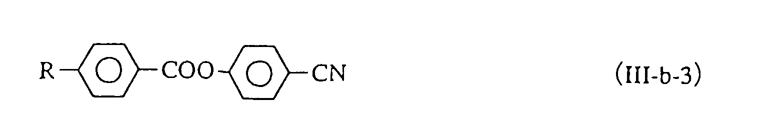

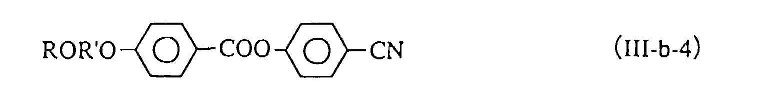

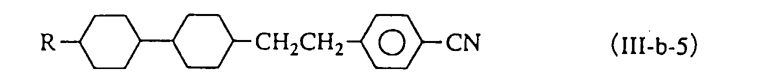

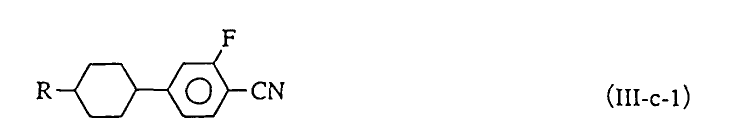

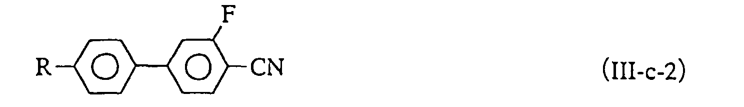

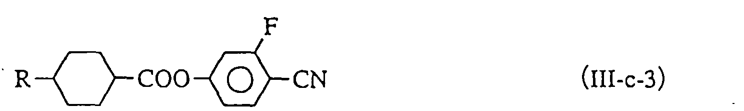

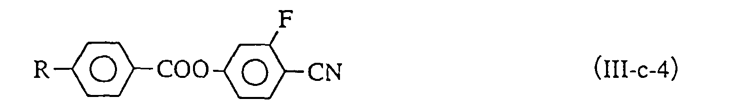

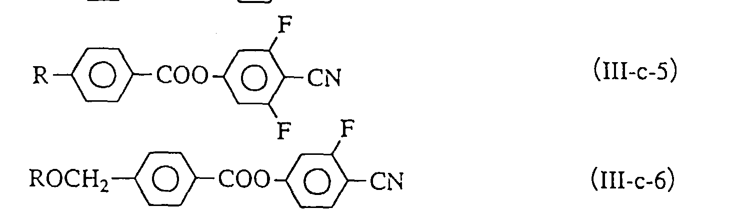

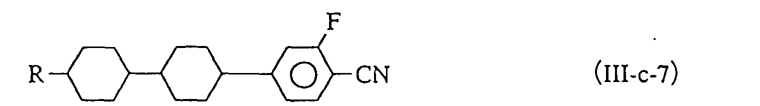

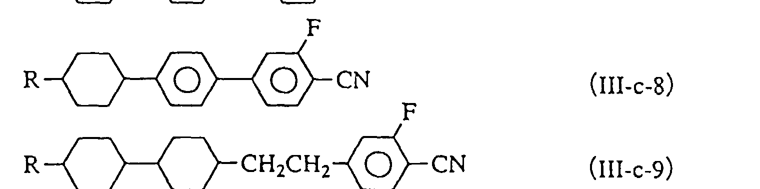

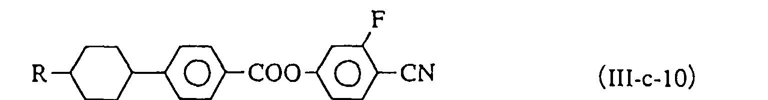

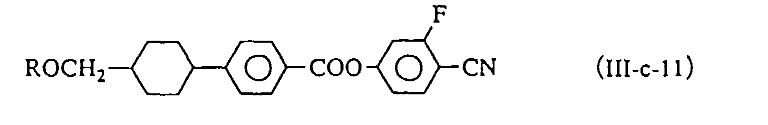

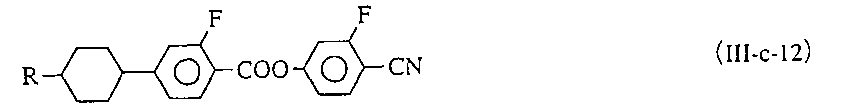

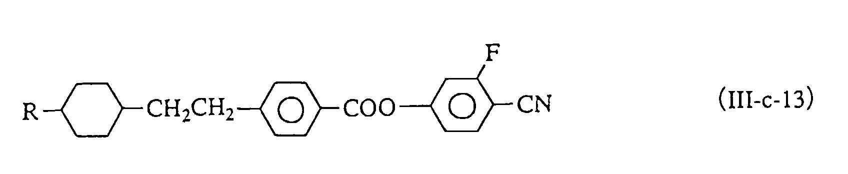

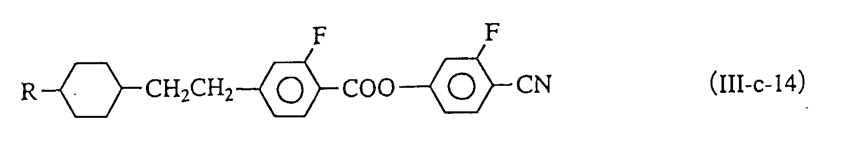

Among them, particularly preferred are those represented by the formulas (III-a-1), (III-a-3), (III-a-6), (III-a-7), (III-b-1), (III-b-3), (III-b-5), (III-c-1), (III-c-4), (III-c-5), (III-c-6), (III-c-7), (III-c-10) or (III-c-11).

These compounds for the third component have positive and large dielectric anisotropy and they are used mainly for decreasing threshold voltage and improving steepness which is important STN property.

Preferred examples of the compounds of the formulas (IV), (V), (VI-a) and (VI-b) which are the fourth component of the present invention are shown below. R nd R' in the formulas independently represent an alkyl group. One or two or more methylene groups (-CH₂-) which are not vicinal in the alkyl group may be substituted by -CH=CH-.

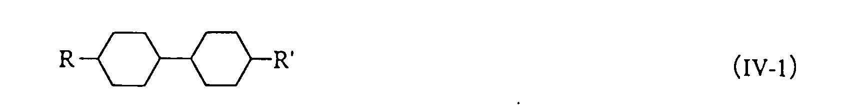

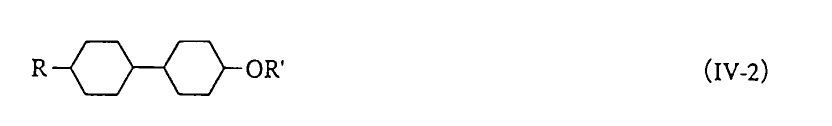

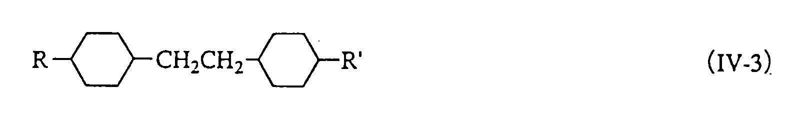

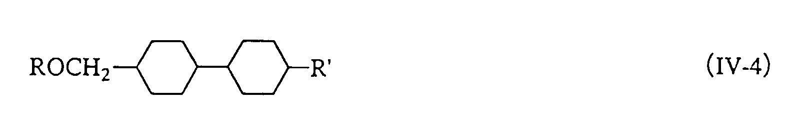

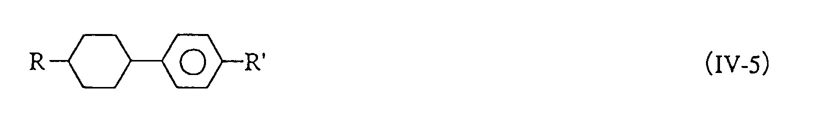

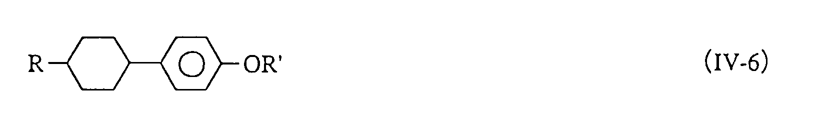

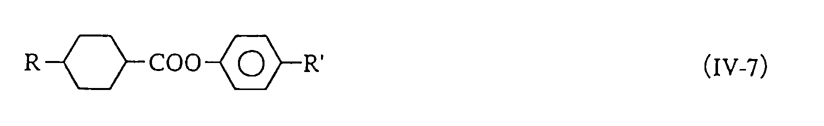

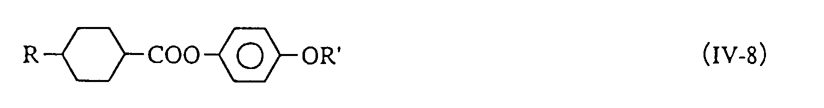

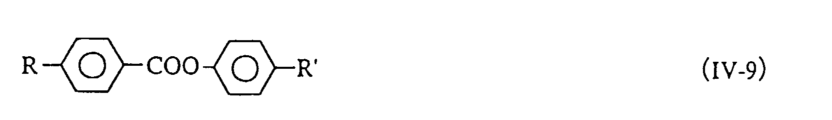

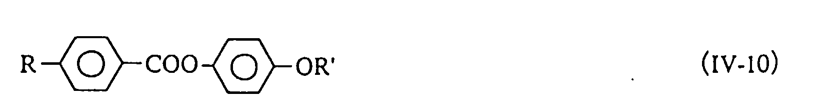

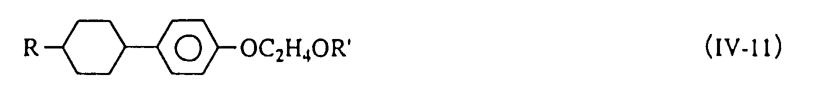

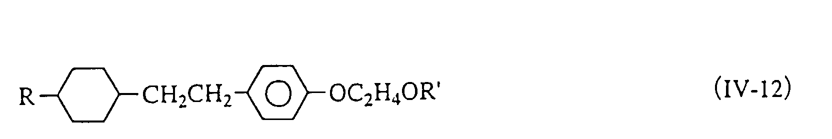

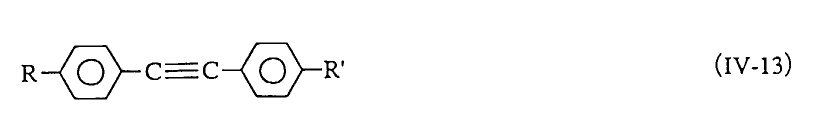

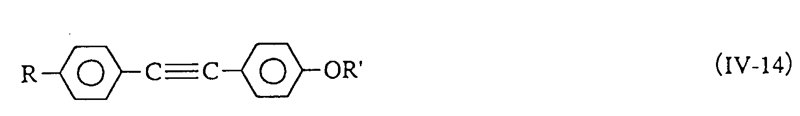

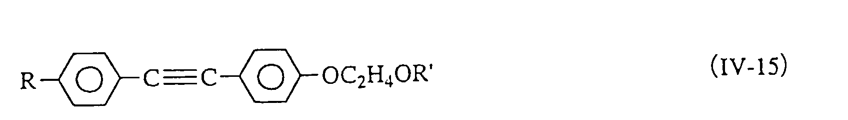

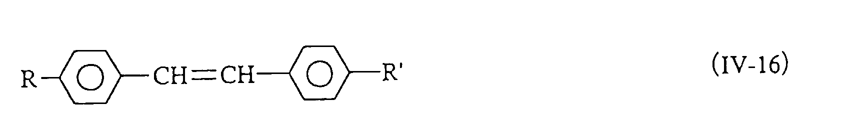

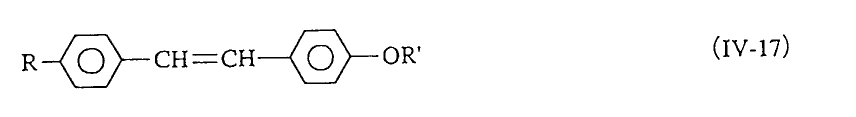

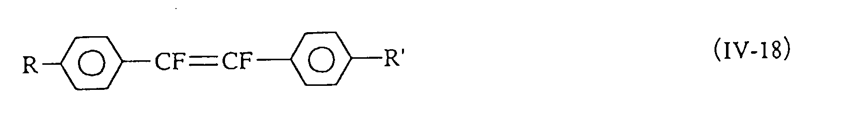

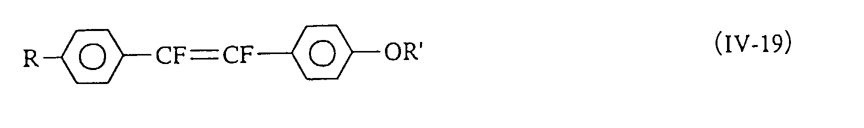

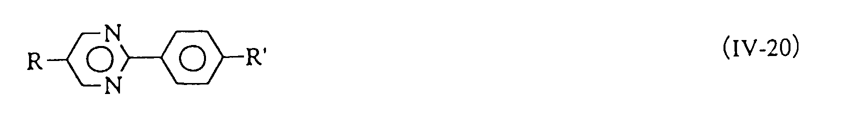

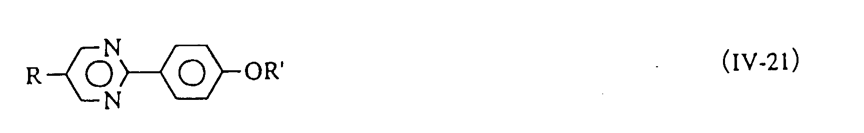

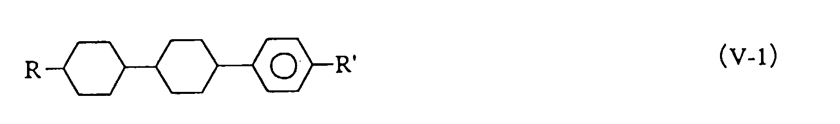

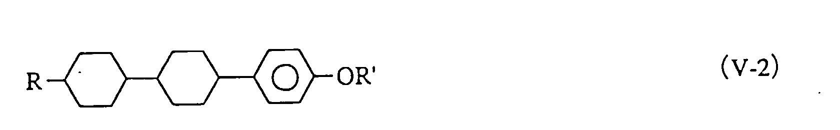

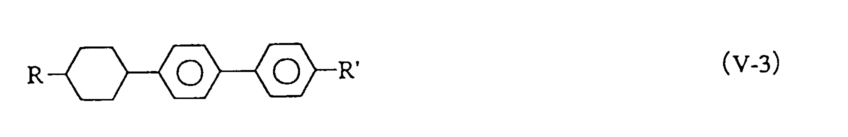

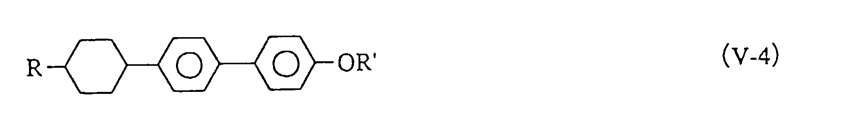

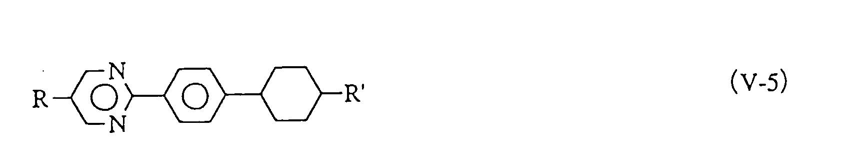

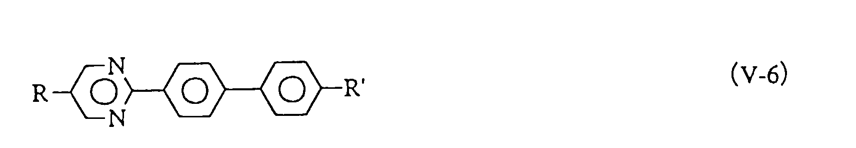

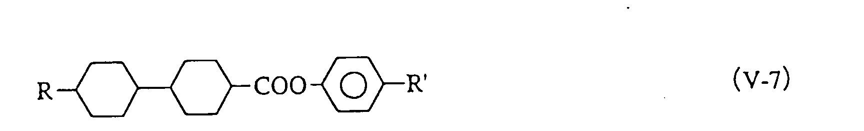

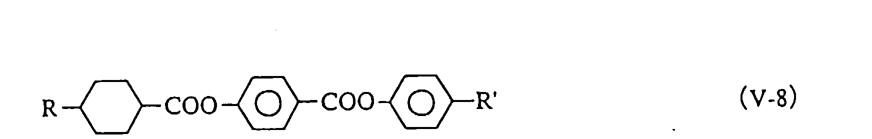

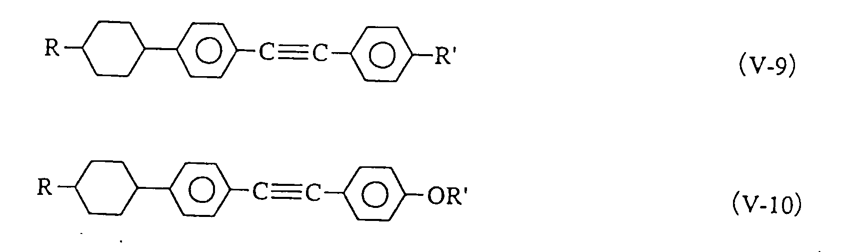

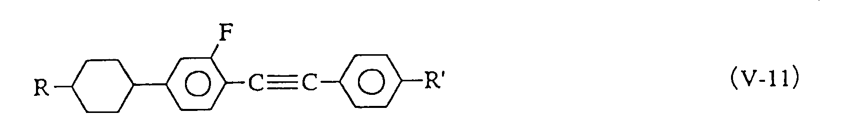

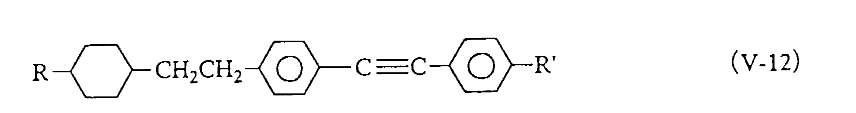

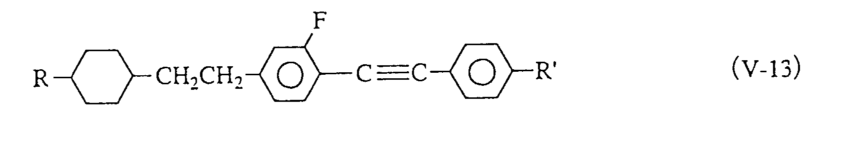

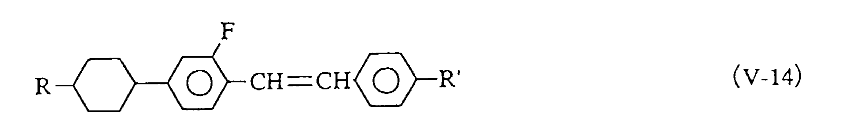

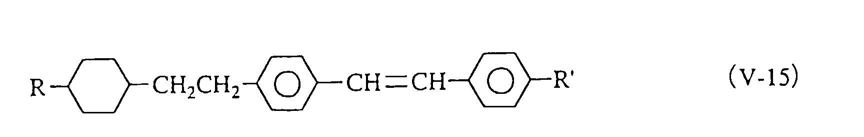

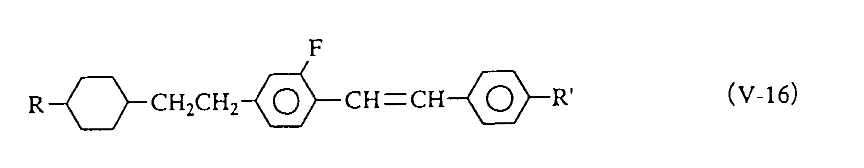

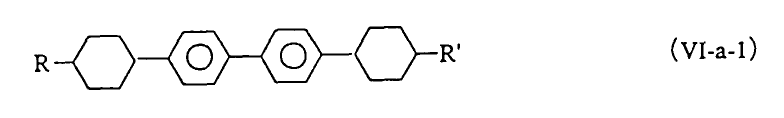

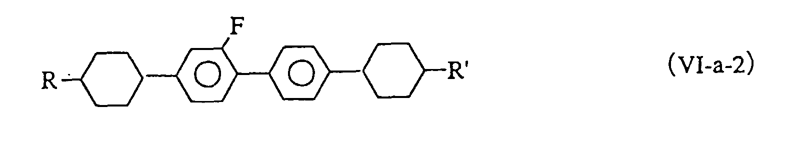

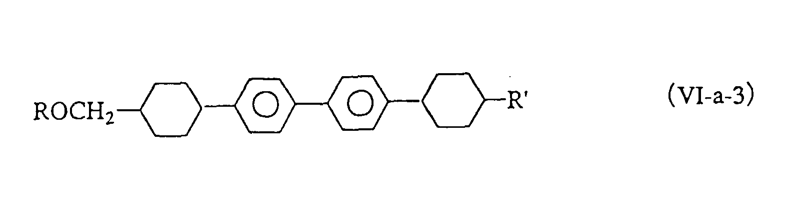

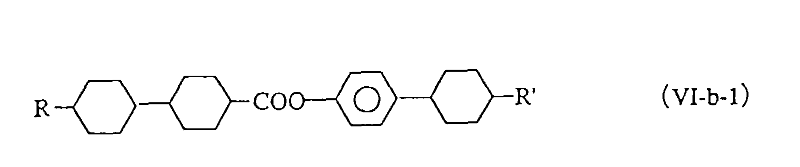

Among them, particularly preferred examples of those of the formula (IV) are those represented by the formulas (IV-1), (IV-2), (IV-4), (IV-5), (IV-6), (IV-7), (IV-8), (IV-13), (IV-14), (IV-18), (IV-19) or (IV-20). Particularly preferred examples of those of the formula (V) are those represented by the formulas (V-1), (V-2), (V-5), (V-9), (V-11), (V-12), (V-14) or (V-15).

The compounds of (IV), (V), (VI-a) and (VI-b).have negative or weak positive dielectric anisotropy. The compounds of the formula (IV) are mainly used for lowering viscosity and/or adjusting Δn . The compounds of the formula (V) are mainly used for broadening the nematic phase range such as increasing clearing point and/or adjusting Δn and viscosity. Since the compounds of the formulas (VI-a) and (VI-b) have very high clearing point, they are used for broadening the nematic phase range such as increasing clearing point and/or adjusting Δn.

Preferred examples of the formulas (VII) and (VIII) are shown below. R in the formulas is an alkyl group.

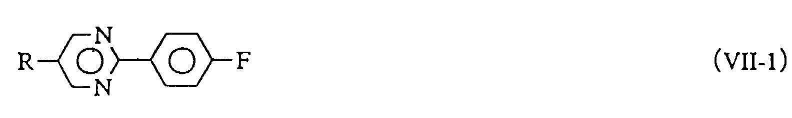

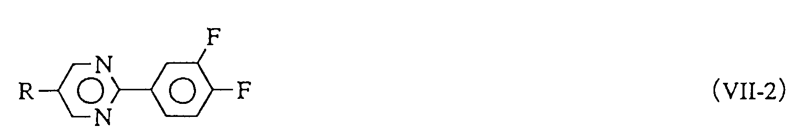

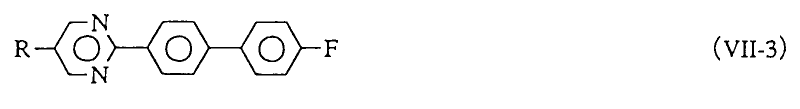

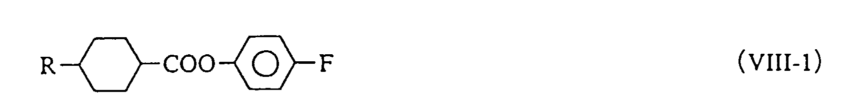

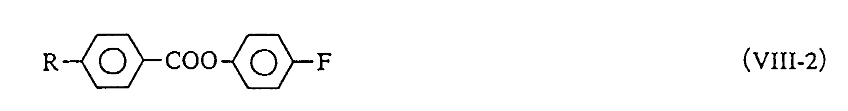

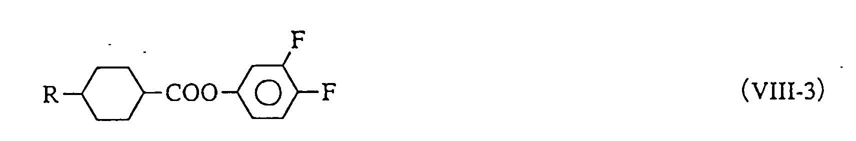

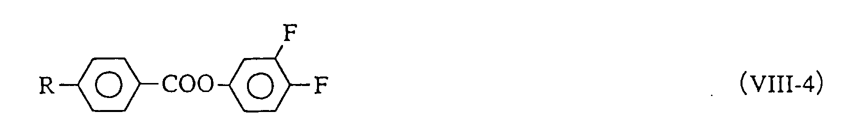

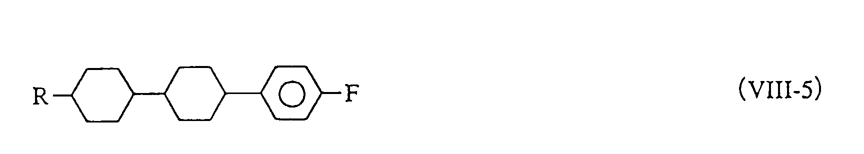

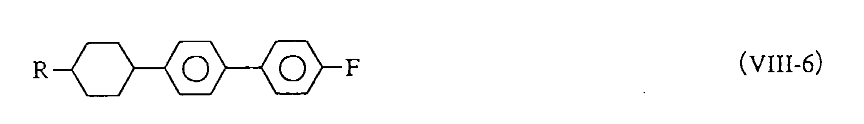

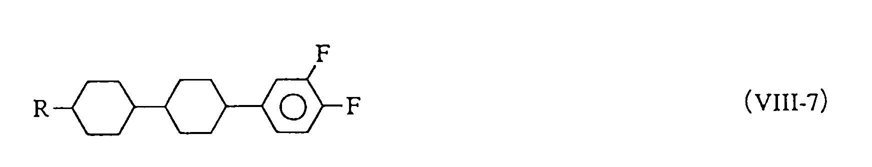

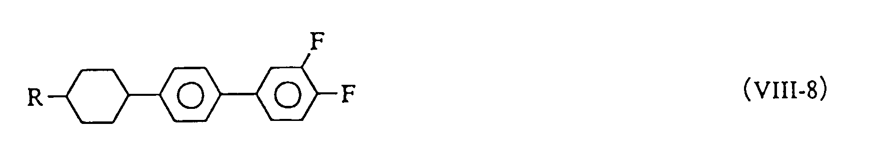

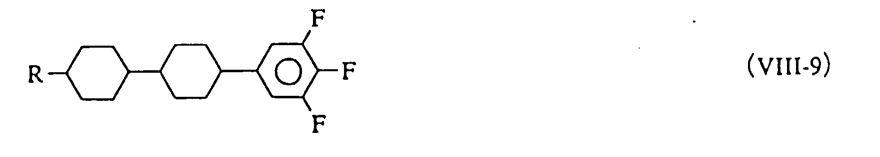

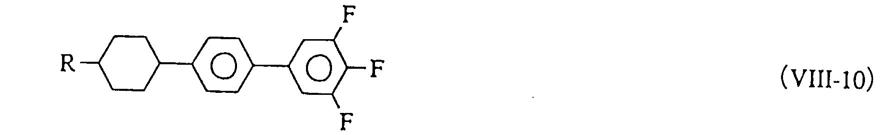

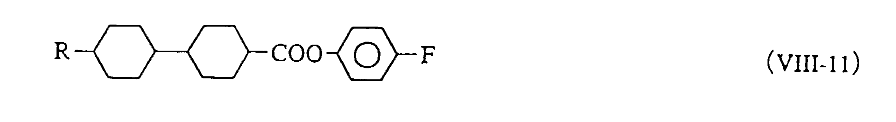

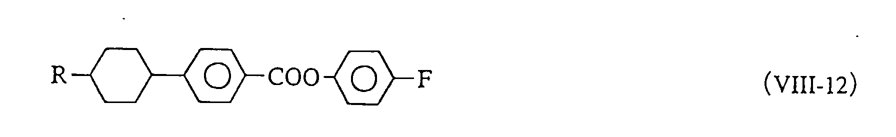

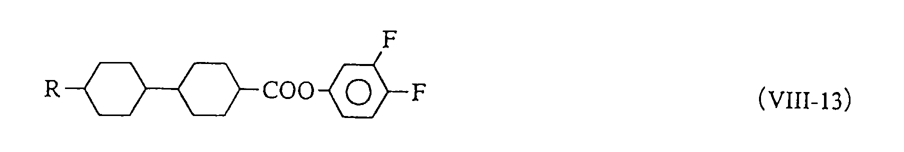

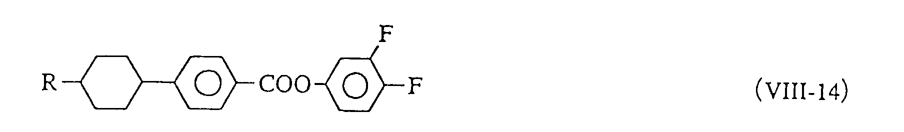

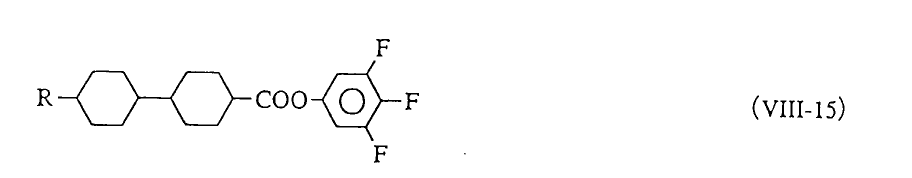

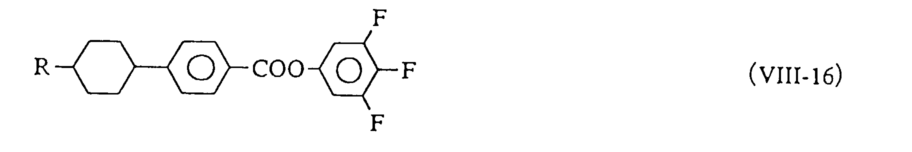

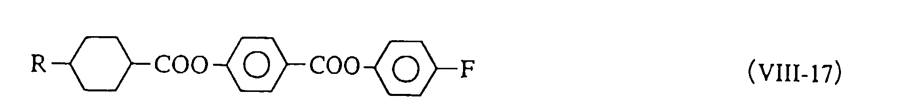

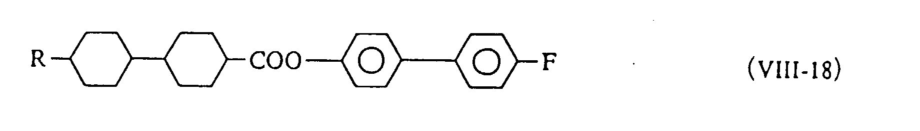

Particularly preferred examples of the compounds of the formula (VII) include those of the formulas (VII-1), (VII-2) or (VII-3). Particularly preferred examples of the compounds of the formula (VIII) include those of the formulas (VIII-1), (VIII-5), (VIII-6), (VIII-7), (VIII-8), (VIII-9), (VIII-10), (VIII-11), (VIII-12), (VIII-13), (VIII-14), (VIII-15), (VIII-16) or (VIII-18).

The compounds of the formulas (VII) to (VIII) have positive dielectric anisotropy and used for lowering threshold voltage and improving temperature dependency. They are also used for adjusting viscosity and Δn and broadening the nematic phase range such as increasing clearing point.

In the liquid crystal composition of the present invention, the amount of the first component is preferably 3 to 60% by weight, more preferably 5 to 55% by weight based on the total weight of the composition. If the amount is less than 3% by weight, it becomes difficult to obtain desired steepness and high speed response, while if it exceeds 60% by weight, threshold voltage of the liquid crystal composition becomes undesirably high. The amount of the second component is preferably 3 to 30% by weight, more preferably 3 to 25% by weight based on the total weight of the composition. If the amount is less than 3% by weight, it becomes difficult to obtain desired steepness, high speed response and high Δn, while if it exceeds 30% by weight, threshold voltage of the liquid crystal composition becomes undesirably high. The amount of the third component is preferably 5 to 70% by weight, more preferably 5 to 65% by weight based on the total weight of the composition. If the amount is less than 5% by weight, threshold voltage of the liquid crystal composition becomes undesirably high, while if it exceeds 70% by weight, viscosity of the liquid crystal composition becomes undesirably high. The amount of the fourth component is 0 to 60% by weight, more preferably 0 to 50% by weight based on the total weight of the composition. If the amount exceeds 60% by weight, threshold voltage of the liquid crystal composition becomes undesirably high. The amount of the fifth component is 0 to 50% by weight, more preferably 0 to 40% by weight based on the total weight of the composition.

The liquid crystal composition of the present invention can be prepared by conventional methods. Generally, they may be prepared by dissolving various components at an elevated temperature. Further, the liquid crystal composition of the present invention may be improved and optimized by the addition of an additive suitable for an intended purpose. Such additives are well known in the art and described in detail in literature. Typically, a chiral dopant is added to induce spiral structure of the liquid crystal so as to adjust a desired degree of twist and to restrain reverse twist.

The liquid crystal composition of the present invention can be used as that for guest-host (GH) mode if a dichroic dye such as merocyanine, styryl, azo, azomethine, azoxy, quinophthalone, anthraquinone and tetrazine dyes is added thereto. Further, the composition of the present invention can be used as a liquid crystal composition for polymer dispersed type liquid crystal display element represented by NCAP (Nematic Curvilinear Aligned Phases) which is obtained by microencapsulating nematic liquid crystal and polymer network liquid crystal display element (PNLCD) which is obtained by forming a three dimensional polymer network in liquid crystal. In addition, the composition of the present invention can also be used as a liquid crystal composition for birefringent control (ECB) mode and dynamic scattering (DS) mode.

### Examples

The present invention will be explained below with reference to the following examples to which the present invention is not limited. All the composition ratios are expressed by % by weight or parts by weight. Compounds in Examples and Comparative Examples are expressed according to the way of expression as indicated in Table 1.

As for 240° STN cell evaluation, cell thickness (d) is selected so that the product Δn · d of the cell thickness (d) and refractive anisotropy (Δn) is about 0.85, and a chiral compound is added to the liquid crystal composition so that a ratio d/p of the cell thickness (d) to a pitch (p) of the liquid crystal composition is about 0.5 before introducing into the cell.

Cell evaluation is conducted in yellow mode to measure voltage-transmittance property (V-T property) using 70 Hz square wave. Steepness V₁₀/V₉₀ is a ratio of a voltage (V₁₀) at transmittance of 10% to a voltage (V₉₀) at transmittance of 90%.

The chiral compound used in the following examples is represented by the following formula but the present invention is not limited to the use of the compound.

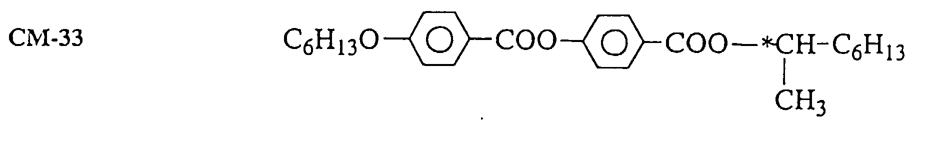

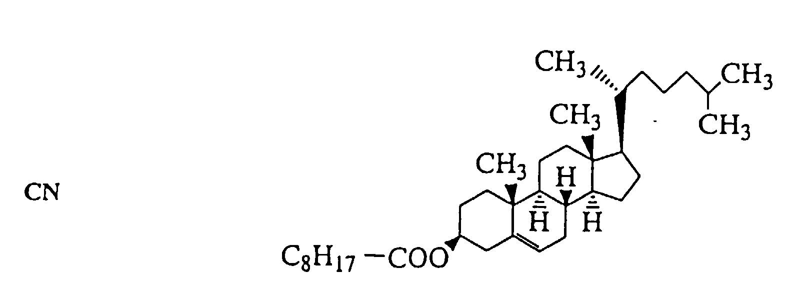

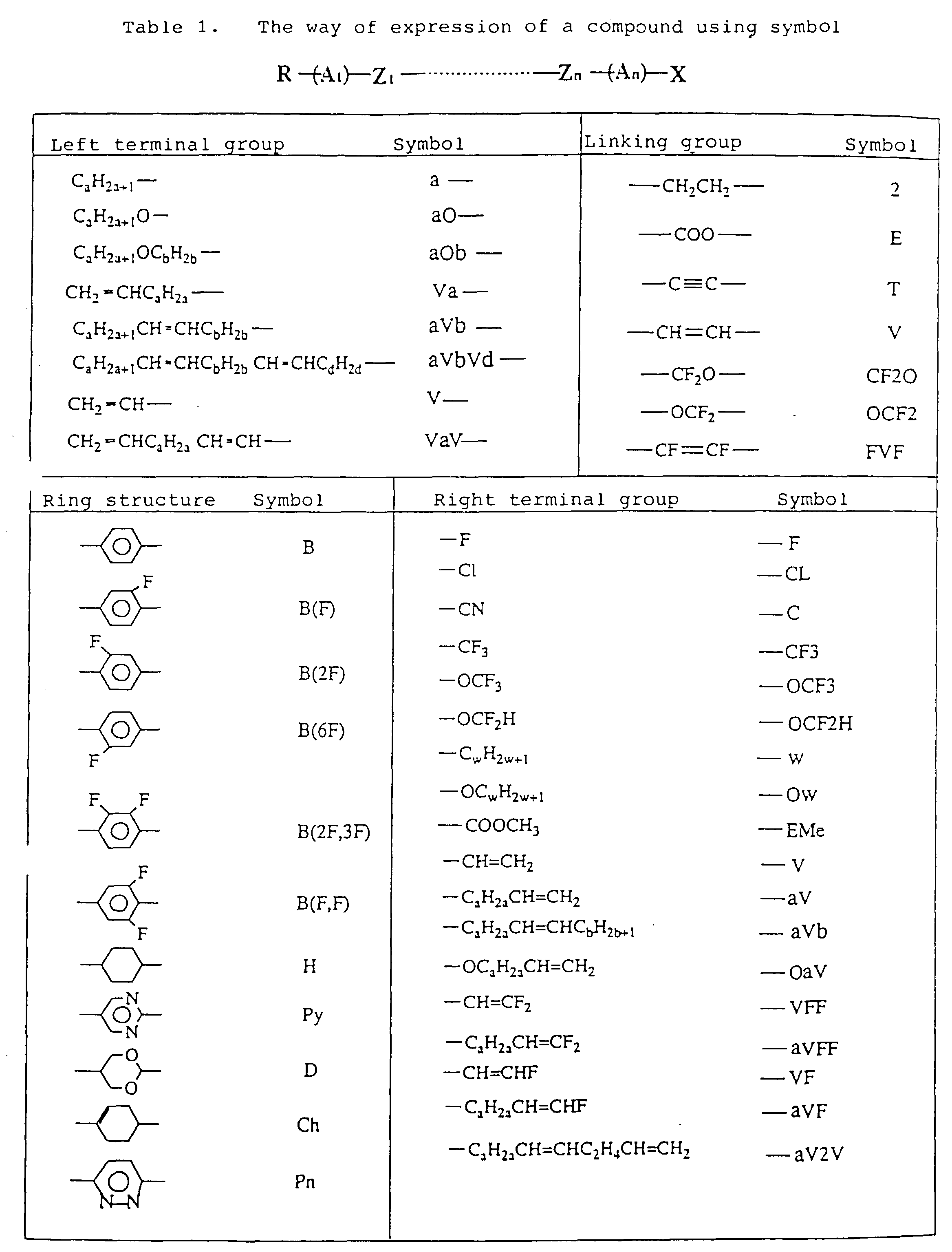

### Comparative Example 1

The following composition described in Use Example 8 of JP-A 1-175947 was prepared.

| | |
|---|---|
| 3-HH-VFF | 15.0% |
| 3-HB-C | 20.4% |
| 5-HB-C | 30.6% |
| 7-HB-C | 21.2% |
| 5-HBB-C | 12.8% |

The liquid crystal composition had clearing point: T_{NI} = 67.6 (°C), viscosity at 20°C: η₂₀ = 20.2(mPa·s), refractive anisotropy at 25°C: Δn = 0.123, dielectric anisotropy at 20°C: Δε = 9.6, and threshold voltage at 20°C: Vth = 1.74(V).

The chiral compound (CM-33)(0.80 parts by weight) was added to 100 parts by weight of the liquid crystal composition. The composition thus obtained was introduced into 240° STN cell of 6.9 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 1.95 (V) and 2.50 (V), respectively, and steepness V₁₀/V₉₀ was 1.282.

### Comparative Example 2

The following composition described in JP-A 6-316541 as liquid crystal composition (a) was prepared.

| | |
|---|---|
| 5-BTB(F)TB-5 | 10.0% |
| 2-BEB-C | 12.0% |
| 4-BEB-C | 12.0% |
| 3-HEB-O2 | 6.6% |
| 3-HEB-O4 | 17.4% |
| 4-HEB-O1 | 13.5% |
| 4-HEB-O2 | 13.6% |
| 5-HEB-O1 | 14.9% |

The liquid crystal composition had clearing point: T_{NI} = 69.1 (°C), viscosity at 20°C: η₂₀ = 33.4(mPa·s), refractive anisotropy at 25°C: Δn = 0.134, dielectric anisotropy at 20°C: Δε = 6.2, and threshold voltage at 20°C: Vth =1.65(V).

The chiral compound (CM-33)(0.85 parts by weight) was added to 100 parts by weight of the liquid crystal composition. The composition thus obtained was introduced into 240° STN cell of 6.3 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 1.85 (V) and 2.41 (V), respectively, and steepness V₁₀/V₉₀ was 1.303.

### Example 1

| | |
|---|---|
| 3-HH-VFF | 14.0% |
| 5-HH-VFF | 4.0% |
| 1-BHH-VFF | 8.0% |
| 5-BTB(F)TB-3 | 4.0% |
| 5-BTB(F)TB-4 | 4.0% |
| 5-BTB(F)TB-5 | 4.0% |
| V2-HB-C | 12.0% |
| 1V2-HB-C | 12.0% |
| 3-HB-C | 24.0% |
| 3-HB(F)-C | 5.0% |
| 2-HHB-C | 3.0% |
| 3-HHB-C | 6.0% |

The liquid crystal composition had clearing point: T_{NI} = 85.6 (°C), viscosity at 20 °C: η₂₀ = 17.8(mPa·s), refractive anisotropy at 25 °C: Δn = 0.153, dielectric anisotropy at 20 °C: Δε = 9.1, and threshold voltage at 20°C: Vth =1.88(V).

The chiral compound (CM-33)(0.74 parts by weight) was added to 100 parts by weight of the liquid crystal composition. The composition thus obtained was introduced into 240° STN cell of 5.6 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 2.11 (V) and 2.21 (V), respectively, and steepness V₁₀/V₉₀ was 1.047.

The composition of this Example has higher clearing point, lower viscosity and larger refractive anisotropy than those of Comparative Examples 1 and 2. Further, the composition of this Example has greatly improved steepness as compared with those of Comparative Examples 1 and 2.

### Example 2

| | |
|---|---|
| 5-HH-VFF | 22.0% |
| 1-BHH-VFF | 12.0% |
| 1-BHH-2VFF | 19.0% |
| 3-BTB(F)TB-5 | 3.0% |
| 5-BTB(F)TB-3 | 6.0% |
| 5-BTB(F)TB-4 | 5.0% |
| 5-BTB(F)TB-5 | 5.0% |
| 1V2-BEB(F,F)-C | 7.0% |
| 3-HB-C | 21.0% |

The liquid crystal composition had clearing point: T_{NI} = 103.9 (°C), viscosity at 20 °C: η₂₀ = 17.4(mPa·s), refractive anisotropy at 25 °C : Δn = 0.159, dielectric anisotropy at 20 °C: Δε = 8.5, and threshold voltage at 20°C: Vth =2.12(V).

The chiral compound (CN)(2.27 parts by weight) was added to 100 parts by weight of the liquid crystal composition. The composition thus obtained was introduced into 240 ° STN cell of 5.3 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 2.33 (V) and 2.44 (V), respectively, and steepness V₁₀/V₉₀ was 1.047.

The composition of this Example has higher clearing point, lower viscosity and larger refractive anisotropy than those of Comparative Examples 1 and 2. Further, the composition of this Example has greatly improved steepness as compared with those of Comparative Examples 1 and 2.

### Example 3

| | |
|---|---|
| 3-HH-VFF | 30.0% |
| 5-BTB(F)TB-3 | 12.0% |
| 1V2-BEB(F,F)-C | 6.0% |
| 3-HB-C | 10.0% |
| 2-BTB-1 | 10.0% |
| 2-BTB-3 | 9.0% |
| 3-HHB-1 | 7.0% |
| 3-HB(F)TB-2 | 6.0% |
| 3-HB(F)TB-3 | 5.0% |
| 3-HB(F)TB-4 | 5.0% |

The liquid crystal composition had clearing Point: T_{NI} = 81.0 (°C), viscosity at 20 °C: η₂₀ = 12.0(mPa·s), refractive anisotropy at 25 °C: Δn = 0.182, dielectric anisotropy at 20 °C: Δε = 4.8, and threshold voltage at 20°C: Vth = 2.13(V).

The chiral compound (CM-33)(1.13 parts by weight) was added to 100 parts by weight of the liquid crystal composition. The composition thus obtained was introduced into 240° STN cell of 4.7 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 2.35 (V) and 2.47 (V), respectively, and steepness V₁₀/V₉₀ was 1.051.

The composition of this Example has higher clearing point, lower viscosity and larger refractive anisotropy than those of Comparative Examples 1 and 2. Further, the composition of this Example has greatly improved steepness as compared with those of Comparative Examples 1 and 2.

### Example 4

| | |
|---|---|
| 3-HH-VFF | 30.0% |
| 5-BTB(F)TB-2 | 3.0% |
| 5-BTB(F)TB-3 | 4.0% |
| 5-BTB(F)TB-4 | 3.0% |
| 1V2-BEB(F,F)-C | 8.0% |
| 3-HH-4 | 13.0% |
| 3-HH-5 | 3.0% |
| 2-BTB-1 | 14.0% |
| 3-H2BTB-2 | 6.0% |
| 3-PyBB-F | 8.0% |
| 4-PyBB-F | 8.0% |

The liquid crystal composition had clearing point: T_{NI} = 80.3 (°C), viscosity at 20 °C : η₂₀ = 13.9(mPa·s), refractive anisotropy at 25 °C: Δn = 0.172, dielectric anisotropy at 20 °C: Δε = 5.7, and threshold voltage at 20°C: Vth =2.14(V).

The chiral compound (CN)(1.63 parts by weight) was added to 100 parts by weight of the liquid crystal composition. The composition thus obtained was introduced into 240 ° STN cell of 4.9 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 2.44 (V) and 2.57 (V), respectively, and steepness V₁₀/V₉₀ was 1.053.

The composition of this Example has higher clearing point, lower viscosity and larger refractive anisotropy than those of Comparative Examples 1 and 2. Further, the composition of this Example has greatly improved steepness as compared with those of Comparative Examples 1 and 2.

### Example 5

| | |
|---|---|
| 5-HH-VFF | 30.0% |
| 5-BTB(F)TB-2 | 3.0% |
| 5-BTB(F)TB-3 | 4.0% |
| 5-BTB(F)TB-4 | 3.0% |
| 1V2-BEB(F,F)-C | 8.0% |
| 3-HH-4 | 8.0% |
| 3-HB-O2 | 7.0% |
| 2-BTB-1 | 15.0% |
| 3-HHB-1 | 6.0% |
| 3-PyBB-F | 8.0% |
| 4-PyBB-F | 8.0% |

The liquid crystal composition had clearing point: T_{NI} = 79.7 (°C), viscosity at 20 °C: η₂₀ = 18.6(mPa·s), refractive anisotropy at 25 °C: Δn = 0.172, dielectric anisotropy at 20 °C: Δε = 5.5, and threshold voltage at 20°C: Vth =2.13(V).

The chiral compound (CN)(1.60 parts by weight) was added to 100 parts by weight of the liquid crystal composition. The composition thus obtained was introduced into 240 ° STN cell of 4.9 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 2.43 (V) and 2.55 (V), respectively, and steepness V₁₀/V₉₀ was 1.049.

The composition of this Example has higher clearing point, lower viscosity and larger refractive anisotropy than those of Comparative Examples 1 and 2. Further, the composition of this Example has greatly improved steepness as compared with those of Comparative Examples 1 and 2.

### Example 6

| | |
|---|---|
| 3-HH-VFF | 11.0% |
| 5-BTB(F)TB-2 | 5.0% |
| 5-BTB(F)TB-3 | 5.0% |
| 1V2-BEB(F,F)-C | 7.0% |
| 3-HB-C | 14.0% |
| 3-BB-C | 2.0% |
| 3-DB-C | 2.0% |
| 1O1-HB-C | 2.0% |
| 3-HH-4 | 11.0% |
| 3-HHB-1 | 8.0% |
| 3-HHB-3 | 17.0% |
| 3-HHB-O1 | 2.0% |
| 3-H2BTB-2 | 4.0% |
| 3-HHEB-F | 5.0% |
| 5-HHEB-F | 3.0% |
| 3-HBEB-F | 2.0% |

The liquid crystal composition had clearing point: T_{NI} = 106.5 (°C), viscosity at 20 °C: η₂₀ = 18.1(mPa·s), refractive anisotropy at 25 °C: Δn = 0.138, dielectric anisotropy at 20 °C: Δε = 7.8, and threshold voltage at 20°C: Vth = 2.18(V).

The chiral compound (CM-33)(0.79 parts by weight) was added to 100 parts by weight of the liquid crystal composition. The composition thus obtained was introduced into 240° STN cell of 6.3 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 2.40 (V) and 2.54(V), respectively, and steepness V₁₀/V₉₀ was 1.058.

The composition of this Example has higher clearing point, lower viscosity and larger refractive anisotropy than those of Comparative Examples 1 and 2. Further, the composition of this Example has greatly improved steepness as compared with those of Comparative Examples 1 and 2.

### Example 7

| | |
|---|---|
| 3-HH-VFF | 28.0% |
| 5-BTB(F)TB-2 | 5.0% |
| 5-BTB(F)TB-3 | 5.0% |
| 5-BTB(F)TB-4 | 5.0% |
| 1V2-BEB(F,F)-C | 7.0% |
| 3-HB-C | 5.0% |
| 2-BTB-1 | 10.0% |
| 3-BTB-1 | 9.0% |
| 3-H2BTB-2 | 5.0% |
| 3-H2BTB-3 | 5.0% |
| 3-HB(F)TB-2 | 8.0% |
| 3-HB(F)TB-3 | 8.0% |

The liquid crystal composition had clearing point: T_{NI} = 91.2 (°C), viscosity at 20 °C: η₂₀ = 14.3(mPa·s), refractive anisotropy at 25 °C: Δn = 0.211, dielectric anisotropy at 20 °C: Δε = 4.5, and threshold voltage at 20°C: Vth =2.32(V).

The chiral compound (CM-33)(1.46 parts by weight) was added to 100 parts by weight of the liquid crystal composition. The composition thus obtained was introduced into 240° STN cell of 4.0 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 2.62 (V) and 2.72(V), respectively, and steepness V₁₀/V₉₀ was 1.038.

The composition of this Example has higher clearing point, lower viscosity and larger refractive anisotropy than those of Comparative Examples 1 and 2. Further, the composition of this Example has greatly improved steepness as compared with those of Comparative Examples 1 and 2.

### Example 8

| | |
|---|---|
| 3-HH-VFF | 30.0% |
| 5-BTB(F)TB-3 | 12.0% |
| 1V2-BEB(F,F)-C | 6.0% |
| 3-HB-C | 11.0% |
| 2-BTB-1 | 10.0% |
| 1-BTB-3 | 8.0% |
| 3-HHB-1 | 8.0% |
| 3-HHB-3 | 10.0% |
| 3-HB(F)VB-2 | 5.0% |

The liquid crystal composition had clearing point: T_{NI} = 80.0 (°C), viscosity at 20 °C: η₂₀ = 11.1(mPa·s), refractive anisotropy at 25 °C: Δn = 0.166, dielectric anisotropy at 20 °C: Δε = 5.1, and threshold voltage at 20°C: Vth =2.17(V).

The chiral compound (CM-33)(1.04 parts by weight) was added to 100 parts by weight of the liquid crystal composition. The composition thus obtained was introduced into 240° STN cell of 5.1 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 2.37 (V) and 2.50(V), respectively, and steepness V₁₀/V₉₀ was 1.055.

The composition of this Example has higher clearing point, lower viscosity and larger refractive anisotropy than those of Comparative Examples 1 and 2. Further, the composition of this Example has greatly improved steepness as compared with those of Comparative Examples 1 and 2.

### Example 9

| | |
|---|---|
| 5-HH-VFF | 28.0% |
| 5-BTB(F)TB-2 | 5.0% |
| 5-BTB(F)TB-3 | 5.0% |
| 5-BTB(F)TB-4 | 5.0% |
| 1V2-BEB(F,F)-C | 7.0% |
| 3-HB-C | 5.0% |
| 2-BTB-1 | 10.0% |
| 3-BTB-1 | 9.0% |
| 3-H2BTB-2 | 5.0% |
| 3-H2BTB-3 | 5.0% |
| 3-HB(F)TB-2 | 8.0% |
| 3-HB(F)TB-3 | 8.0% |

The liquid crystal composition had clearing point: T_{NI}= 94.5 (°C), viscosity at 20 °C: η₂₀= 16.1(mPa·s), refractive anisotropy at 25 °C: Δn = 0.211, dielectric anisotropy at 20 °C: Δε = 4.5, and threshold voltage at 20°C: Vth =2.53(V).

The chiral compound (CM-33)(1.42 parts by weight) was added to 100 parts by weight of the liquid crystal composition. The composition thus obtained was introduced into 240° STN cell of 4.0 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 2.57 (V) and 2.70(V), respectively, and steepness V₁₀/V₉₀ was 1.051.

The composition of this Example has higher clearing point, lower viscosity and larger refractive anisotropy than those of Comparative Examples 1 and 2. Further, the composition of this Example has greatly improved steepness as compared with those of Comparative Examples 1 and 2.

### Example 10

| | |
|---|---|
| 3-HH-VFF | 27.0% |
| 5-BTB(F)TB-1 | 5.0% |
| 5-BTB(F)TB-3 | 10.0% |
| 1V2-BEB(F,F)-C | 10.0% |
| 3-HB-C | 4.0% |
| 3-HH-4 | 6.0% |
| 1O1-HH-3 | 2.0% |
| 3-PyB-2 | 2.0% |
| 5-HEB-O1 | 2.0% |
| 2-BTB-1 | 12.0% |
| 3-BTB-1 | 4.0% |
| 3-HHB-1 | 8.0% |
| 3-H2BTB-2 | 4.0% |
| 3-PyBH-3 | 2.0% |
| 4-PyBB-3 | 2.0% |

The liquid crystal composition had clearing point: T_{NI} = 78.1 (°C), viscosity at 20 °C: η₂₀ = 13.1(mPa·s), refractive anisotropy at 25 °C: Δn = 0.174, dielectric anisotropy at 20 °C : Δε = 6.1, and threshold voltage at 20°C: Vth = 2.16(V).

The chiral compound (CN)(2.05 parts by weight) was added to 100 parts by weight of the liquid crystal composition. The composition thus obtained was introduced into 240 ° STN cell of 4.9 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 2.46 (V) and 2.60(V), respectively, and steepness V₁₀/V₉₀ was 1.057.

The composition of this Example has higher clearing point, lower viscosity and larger refractive anisotropy than those of Comparative Examples 1 and 2. Further, the composition of this Example has greatly improved steepness as compared with those of Comparative Examples 1 and 2.

### Example 11

| | |
|---|---|
| 3-HH-VFF | 14.0% |
| 5-HH-VFF | 15.0% |
| 3-HH-3VF | 2.0% |
| 1-BHH-VF | 2.0% |
| 1-BHH-VFF | 2.0% |
| 5-BTB(F)TB-3 | 3.0% |
| 5-BTB(F)TB-4 | 5.0% |
| 3-HB-C | 6.0% |
| 3-BEB-C | 4.0% |
| 1V2-BEB(F,F)-C | 10.0% |
| 3-HHB-1 | 6.0% |
| 3-HHB-O1 | 4.0% |
| 3-HHB-3 | 12.0% |
| 2-BTB-O1 | 10.0% |
| 4-BTB-O2 | 5.0% |

The liquid crystal composition had clearing point: T_{NI} = 84.1 (°C), viscosity at 20 °C : η₂₀ = 13.9(mPa·s), refractive anisotropy at 25 °C: Δn = 0.145, dielectric anisotropy at 20 °C: Δε = 6.5, and threshold voltage at 20°C: Vth =1.92(V).

The chiral compound (CM-33)(0.89 parts by weight) was added to 100 parts by weight of the liquid crystal composition. The composition thus obtained was introduced into 240° STN cell of 5.9 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 2.16 (V) and 2.31(V), respectively, and steepness V₁₀/V₉₀ was 1.069.

The composition of this Example has higher clearing point, lower viscosity and larger refractive anisotropy than those of Comparative Examples 1 and 2. Further, the composition of this Example has greatly improved steepness as compared with those of Comparative Examples 1 and 2.

### Example 12

| | |
|---|---|
| 3-HH-1VF | 2.0% |
| 5-HH-VFF | 13.0% |
| 1-BHH-2VF | 2.0% |
| 1-BHH-3VF | 2.0% |
| 5-BTB(F)TB-3 | 4.0% |
| 5-BTB(F)TB-4 | 4.0% |
| 5-BTH(F)TB-5 | 4.0% |
| V2-HB-C | 8.0% |
| 1V2-HB-C | 8.0% |
| 1V2-BEB(F,F)-C | 9.0% |
| 3-HHB-O1 | 5.0% |
| 3-HHB-1 | 8.0% |
| 3-HHB-3 | 13.0% |
| 3-HB(F)TB-2 | 5.0% |
| 5-PyB-F | 8.0% |
| 3-HHB-F | 3.0% |
| 3-HEBEB-F | 2.0% |

The liquid crystal composition had clearing point: T_{NI} = 103.0 (°C), viscosity at 20 °C: η₂₀ = 18.5(mPa·s), refractive anisotropy at 25 °C : Δn = 0.152, dielectric anisotropy at 20 °C: Δε = 8.8, and threshold voltage at 20°C: Vth =2.00(V).

The chiral compound (CN)(2.14 parts by weight) was added to 100 parts by weight of the liquid crystal composition. The composition thus obtained was introduced into 240 ° STN cell of 5.6 µm in thickness and the cell was evaluated in yellow mode.

Voltage-transmittance characteristic (V-T characteristic) was measured using 70 Hz square wave. A voltage (V₉₀) at transmittance of 90% and a voltage (V₁₀) at transmittance of 10% were 2.17 (V) and 2.32(V), respectively, and steepness V₁₀/V₉₀ was 1.069.

The composition of this Example has higher clearing point, lower viscosity and larger refractive anisotropy than those of Comparative Examples 1 and 2. Further, the composition of this Example has greatly improved steepness as compared with those of Comparative Examples 1 and 2.

### Example 13

| | |
|---|---|
| 3-HH-VFF | 32.0% |
| 3-BTB(F)TB-5 | 6.0% |
| 5-BTB(F)TB-3 | 7.0% |
| 3O1-BEB(F)-C | 15.0% |
| 3-HHB-1 | 7.0% |
| 3-HHB-O1 | 3.0% |
| 3-H2BTB-2 | 4.0% |
| 3-H2BTB-3 | 4.0% |
| 3-H2BTB-4 | 4.0% |
| 3-HB(F)TB-2 | 6.0% |
| 3-HB(F)TB-3 | 6.0% |
| 3-HB(F)TB-4 | 6.0% |

The liquid crystal composition had clearing point: T_{NI} = 112.2 (°C), viscosity at 20 °C: η₂₀ =16.5(mPa·s), refractive anisotropy at 25 °C: Δn = 0.182, dielectric anisotropy at 20 °C: Δε = 6.3, and threshold voltage at 20°C: Vth =2.29(V).

The composition of this Example has higher clearing point, lower viscosity and larger refractive anisotropy than those of Comparative Examples 1 and 2.

### Example 14

| | |
|---|---|
| 3-HH-VFF | 14.0% |
| 5-BTB(F)TB-3 | 4.0% |
| 5-BTB(F)TB-4 | 4.0% |
| 5-BTB(F)TB-5 | 4.0% |
| V2-HB-C | 12.0% |
| 1V2-HB-C | 12.0% |
| 3-HB-C | 24.0% |
| 3-HB(F)-C | 5.0% |
| 2-HHB-C | 3.0% |
| 3-HHB-C | 6.0% |
| 2-BTB-1 | 4.0% |
| 3-HB(F)TB-2 | 8.0% |

The liquid crystal composition had clearing Point: T_{NI}= 85.3 (°C), viscosity at 20 °C: η₂₀ = 17.4(mPa·s), refractive anisotropy at 25 °C: Δn = 0.171, dielectric anisotropy at 20 °C: Δε = 9.4, and threshold voltage at 20°C: Vth =1.87(V).

The composition of this Example has higher clearing point, lower viscosity and larger refractive anisotropy than those of Comparative Examples 1 and 2.

### Example 15

| | |
|---|---|
| 3-HH-VFF | 30.0% |
| 5-BTB(F)TB-3 | 5.0% |
| 5-BTB(F)TB-4 | 5.0% |
| V2-HB-C | 9.0% |
| 1V2-HB-C | 8.0% |
| 1V2-BEB(F,F)-C | 8.0% |
| 2-HHB-C | 5.0% |
| 3-HHB-C | 5.0% |
| 4-HHB-C | 3.0% |
| 3-HHB(F)-C | 2.0% |
| 2-H2BTB-2 | 5.0% |
| 3-H2BTB-4 | 5.0% |
| 1O1-HBBH-4 | 5.0% |
| 1O1-HBBH-5 | 5.0% |

The liquid crystal composition had clearing point: T_{NI}= 117.3 (°C), viscosity at 20 °C: η₂₀ = 19.7(mPa·s), refractive anisotropy at 25 °C: Δn = 0.154, dielectric anisotropy at 20 °C: Δε = 9.6, and threshold voltage at 20°C : Vth =2.10(V).

The composition of this Example has higher clearing point, lower viscosity and larger refractive anisotropy than those of Comparative Examples 1 and 2.

### Example 16

| | |
|---|---|
| 5-HH-VFF | 15.0% |
| 5-BTB(F)TB-3 | 5.0% |
| 5-BTB(F)TB-4 | 5.0% |
| 5-BTB(F)TB-5 | 4.0% |
| V2-HB-C | 12.0% |
| 1V2-HB-C | 13.0% |
| 1V2-BEB(F,F)-C | 6.0% |
| 3-HB-C | 10.0% |
| 3-HHB-1 | 10.0% |
| 3-HHB-3 | 12.0% |
| 3-HHB-O1 | 4.0% |
| 3-HHB-F | 2.0% |
| 3-HBB-F | 2.0% |

The liquid crystal composition had clearing point: T_{NI} = 100.4 (°C), viscosity at 20 °C: η₂₀ = 19.5(mPa·s), refractive anisotropy at 25 °C: Δn = 0.153, dielectric anisotropy at 20 °C: Δε = 9.3, and threshold voltage at 20°C: Vth =2.05(V).

The composition of this Example has higher clearing point, lower viscosity and larger refractive anisotropy than those of Comparative Examples 1 and 2.

### Example 17

| | |
|---|---|
| 5-HH-VFF | 30.0% |
| 1-BHH-VFF | 8.0% |
| 1-BHH-2VFF | 11.0% |
| 5-BTB(F)TB-3 | 5.0% |
| 5-BTB(F)TB-4 | 4.0% |
| 5-BTB(F)TB-5 | 4.0% |
| 1V2-BEB(F,F)-C | 6.0% |
| 3-HB-C | 18.0% |
| 2-BTB-1 | 10.0% |
| 3-HHB-1 | 4.0% |

The liquid crystal composition had clearing Point: T_{NI} = 83.8 (°C), viscosity at 20 °C: η₂₀ = 13.3(mPa·s), refractive anisotropy at 25 °C: Δn = 0.150, dielectric anisotropy at 20 °C: Δε = 6.7, and threshold voltage at 20°C : Vth =2.07(V).

The composition of this Example has higher clearing point, lower viscosity and larger refractive anisotropy than those of Comparative Examples 1 and 2.

### Example 18

| | |
|---|---|
| 5-HH-VFF | 30.0% |
| 1-BHH-2VFF | 20.0% |
| 5-BTB(F)TB-3 | 4.0% |
| 5-BTB(F)TB-4 | 4.0% |
| 5-BTB(F)TB-5 | 4.0% |
| 1V2-BEB(F,F)-C | 13.0% |
| 3-HB-C | 5.0% |
| 3-HB-O2 | 5.0% |
| 3-HHB-1 | 3.0% |
| 3-HB(F)TB-2 | 4.0% |
| 3-HB(F)TB-3 | 4.0% |
| 3-HB(F)TB-4 | 4.0% |

The liquid crystal composition had clearing point: T_{NI} = 100.8 (°C), viscosity at 20 °C : η₂₀ = 16.2(mPa·s), refractive anisotropy at 25 °C : Δn = 0.151, dielectric anisotropy at 20 °C : Δε = 9.2, and threshold voltage at 20°C: Vth =2.02(V).

The composition of this Example has higher clearing point, lower viscosity and larger refractive anisotropy than those of Comparative Examples 1 and 2.

### Example 19

| | |
|---|---|
| 5-HH-VFF | 20.0% |
| 1-BHH-VFF | 18.0% |
| 1-BBH-VFF | 13.0% |
| 5-BTB(F)TB-3 | 5.0% |
| 5-BTB(F)TB-4 | 5.0% |
| 5-BTB(F)TB-5 | 4.0% |
| 1V2-BEB(F,F)-C | 10.0% |
| 3-HB-C | 12.0% |
| 3-HB-O2 | 6.0% |
| 3-HHB-1 | 7.0% |

The liquid crystal composition had clearing point: T_{NI} = 103.1 (°C), viscosity at 20 °C: η₂₀ = 17.7(mPa·s), refractive anisotropy at 25 °C: Δn = 0.154, dielectric anisotropy at 20°C: Δε = 8.9, and threshold voltage at 20°C: Vth =2.04(V).

The composition of this Example has higher clearing point, lower viscosity and larger refractive anisotropy than those of Comparative Examples 1 and 2.

### Example 20

| | |
|---|---|
| 3-HH-VFF | 32.0% |
| 1-BHH-VFF | 5.0% |
| 1-BHH-2VFF | 5.0% |
| 3-BTB(F)TB-5 | 6.0% |
| 5-BTB(F)TB-3 | 7.0% |
| 3O1-BEB(F)-C | 15.0% |
| 3-H2BTB-2 | 4.0% |
| 3-H2BTB-3 | 4.0% |
| 3-H2BTB-4 | 4.0% |
| 3-HB(F)TB-2 | 6.0% |
| 3-HB(F)TB-3 | 6.0% |
| 3-HB(F)TB-4 | 6.0% |

The liquid crystal composition had clearing point: T_{NI} = 110.3 (°C), viscosity at 20 °C: η₂₀ = 17.5(mPa·s), refractive anisotropy at 25 °C : Δn = 0.180, dielectric anisotropy at 20°C: Δε = 6.3, and threshold voltage at 20°C: Vth = 2.28(V).

The composition of this Example has higher clearing point, lower viscosity and larger refractive anisotropy than those of Comparative Examples 1 and 2.

The liquid crystal composition of the present invention has various properties required for the STN display systems, in particular, shows excellent voltage-transmittance characteristic (high steepness) suitable for colorization and is excellent in a high speed response because it has low viscosity and high Δn.

## Claims

1. A liquid crystal composition which comprises a first component comprising at least one compound selected from the group consisting of compounds of formulas (I-a) to (I-f), a second component comprising at least one compound of formula (II) and a third component comprising at least one compound selected from the group consisting of compounds of formulas (III-a) to (III-c). 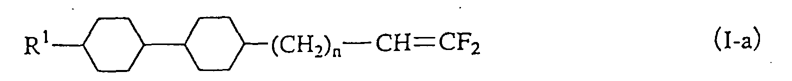 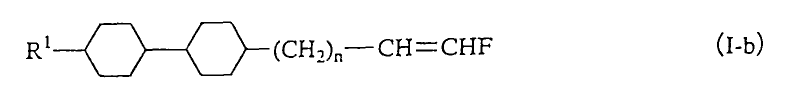 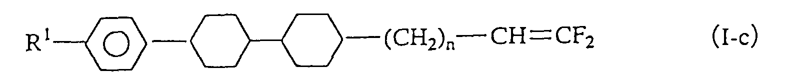 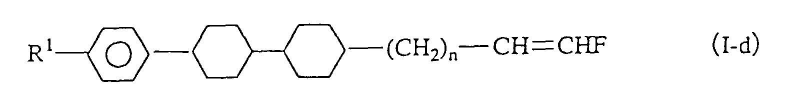 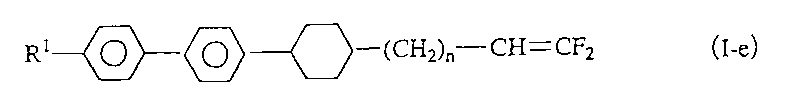 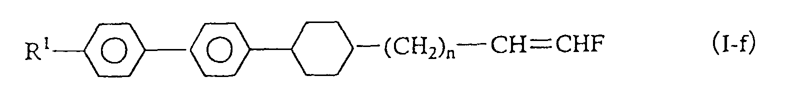 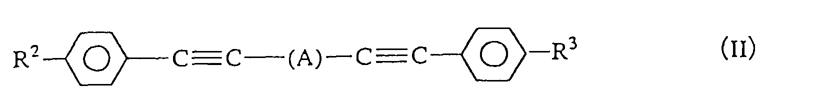 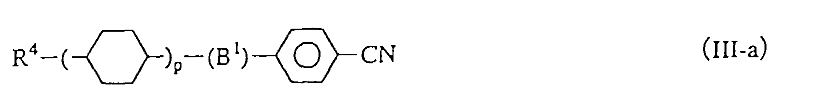 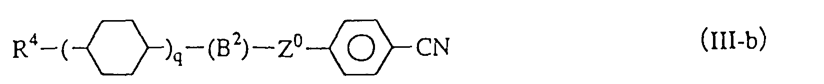 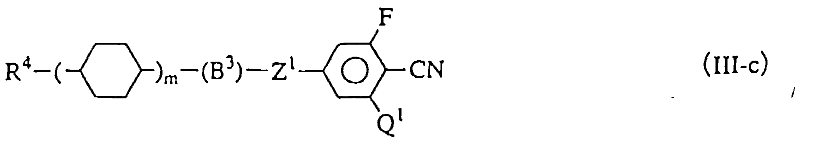 wherein
R¹ is an alkyl group having 1 to 10 carbon atoms; one or two or more methylene groups (-CH₂-) which are not vicinal in the alkyl group may be substituted by oxygen atom (-O-) and/or -CH=CH-; and n is an integer of 0 to 20;
R² and R³ are independently alkyl groups having 1 to 10 carbon atoms;
one or two or more methylene groups (-CH₂-) which are not vicinal in the alkyl groups may be substituted by oxygen atom (-O-) and/or -CH=CH-; and A is 1,4-phenylene group whose hydrogen atom(s) in the lateral position may be substituted by fluorine atom(s);
R⁴ is an alkyl group having 1 to 10 carbon atoms; one or two or more methylene groups (-CH₂-) which are not vicinal in the alkyl group may be substituted by oxygen atom (-O-) and/or -CH=CH-;
Z⁰ is -COO- or -CH₂CH₂-, Z¹ is -CH₂CH₂-, -COO- or a single bond;
Q¹ is hydrogen or fluorine atom; B¹ is 1,4-cyclohexylene, 1,4-phenylene or 1,3-dioxane-2,5-diyl; B² and B³ are independently 1,4-cyclohexylene or 1,4-phenylene group whose hydrogen atom(s) in the lateral position may be substituted by fluorine atom(s); p, q and m are independently 0 or 1.

2. The liquid crystal composition of claim 1 wherein the first component is comprised in the amount of 3 to 60% by weight, the second component in the amount of 3 to 30% by weight and the third component in the amount of 5 to 70% by weight, based on the total weight of the composition.

3. The liquid crystal composition of claim 1 or 2 which further comprises a fourth component comprising at least one compound selected from the group consisting of compounds of formulas (IV), (V), (VI-a) and (VI-b):
R⁵ - (B⁴) - Z² - (C¹) - R⁶ (IV)
wherein R⁵ and R⁶ are independently alkyl groups having 1 to 10 carbon atoms; one or two or more methylene groups (-CH₂-) which are not vicinal in the alkyl groups may be substituted by oxygen atom (-O-) and/or -CH=CH-; B⁴ is 1,4- cyclohexylene, pyrimidine-2,5-diyl or 1,4-phenylene group; C¹ is 1,4-cyclohexylene or 1,4-phenylene group; Z² is -C≡C-, -COO-, -CH₂CH₂-, -CH=CH-, -CF=CF- or a single bond;
R⁷ - (D) - Z³ - (E) - Z⁴ - (G) - R⁸ (V)
wherein R⁷ is an alkyl group having 1 to 10 carbon atoms; one or two or more methylene groups (-CH₂-) which are not vicinal in the alkyl group may be substituted by oxygen atom (-O-) and/or -CH=CH-; R⁸ is an alkyl, alkoxy or alkoxymethyl group having 1 to 10 carbon atoms; D is 1,4-cyclohexylene or pyrimidine-2,5-diyl group; E is 1,4-cyclohexylene or 1,4-phenylene group whose hydrogen atom(s) in the lateral position may be substituted by fluorine atom(s); G is 1,4-cyclohexylene or 1,4-phenylene group; Z³ is -CH₂CH₂- or a single bond; Z⁴ is -C≡C-, -COO-, -CH=CH- or a single bond; 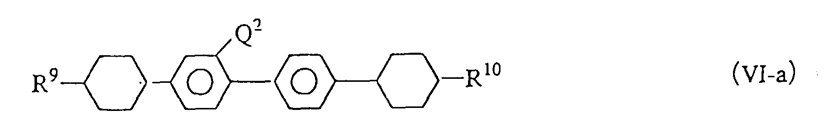 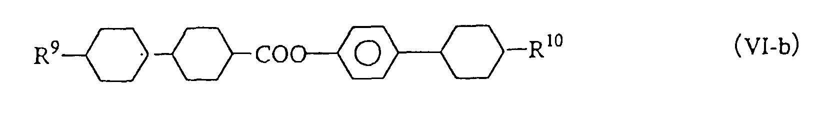 wherein R⁹ is an alkyl group having 1 to 10 carbon atoms; one or two or more methylene groups (-CH₂-) which are not vicinal in the alkyl group may be substituted by oxygen atom (-O-) and/or -CH=CH-; R¹⁰ is an alkyl, alkoxy or alkoxymethyl group having 1 to 10 carbon atoms; and Q² is hydrogen or fluorine atom.

4. The liquid crystal composition of claim 3 wherein the fourth component is comprised in the amount of 0 to 60% by weight based on the total weight of the composition.

5. The liquid crystal composition of any one of claims 1 to 4 which further comprises a fifth component comprising at least one compound selected from the group consisting of compounds of formulas (VII) and (VIII). 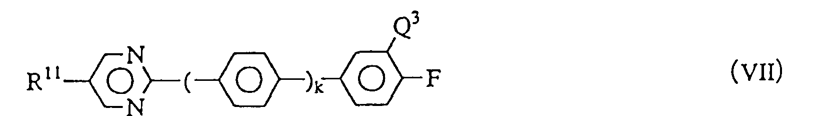 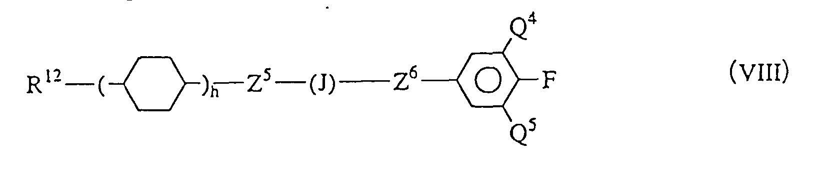 wherein R¹¹ is an alkyl group having 1 to 10 carbon atoms; Q³ is hydrogen or fluorine atom; k is 0 or 1; R¹² is an alkyl group having 1 to 10 carbon atoms; J is 1, 4-cyclohexylene or 1,4-phenylene group; Q⁴ and Q⁵ are independently hydrogen or fluorine atom; Z⁵ and Z⁶ are independently -COO- or single bond; and h is 0, 1 or 2.

6. The liquid crystal composition of claim 5 wherein the fifth component is comprised in the amount of 0 to 50% by weight based on the total weight of the composition.

7. A liquid crystal display element wherein the liquid crystal composition of any one of claims 1 to 6 is used.

8. The liquid crystal display element of claim 7 wherein the element is an STN display element.

## Patentansprüche

1. Flüssigkristall-Zusammensetzung, die umfasst: eine erste Komponente, die mindestens eine Verbindung, ausgewählt aus der Gruppe bestehend aus Verbindungen mit den Formeln (I-a) bis (I-f), umfasst, eine zweite Komponente, die mindestens eine Verbindung mit der Formel (II) umfasst, und eine dritte Komponente, die mindestens eine Verbindung, ausgewählt aus der Gruppe bestehend aus Verbindungen mit den Formeln (III-a) bis (III-c), umfasst: 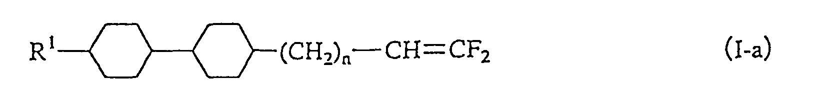 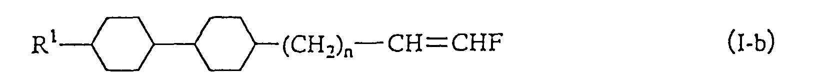 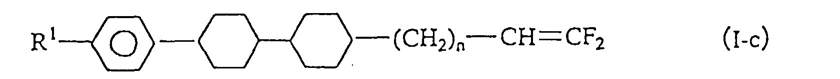 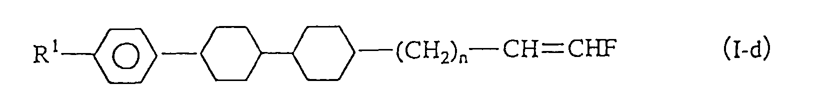 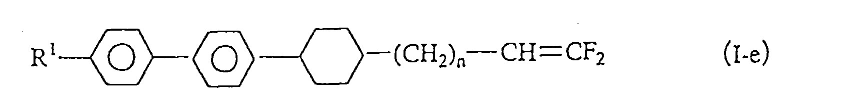 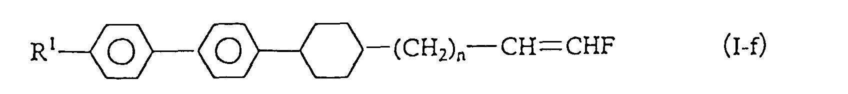 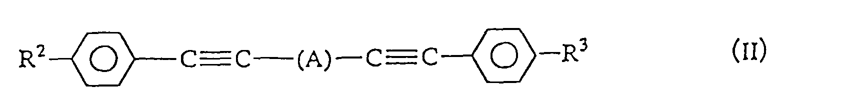 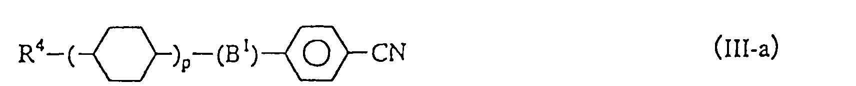 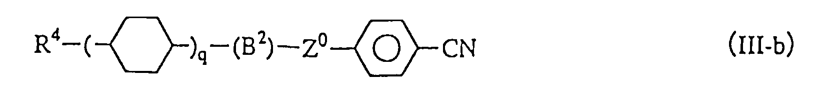 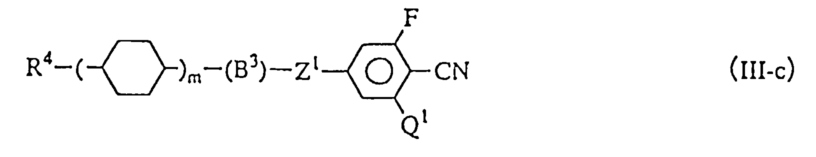 worin
R¹ eine Alkylgruppe mit 1 bis 10 Kohlenstoffatomen ist; eine oder zwei oder mehr Methylengruppen (-CH₂-), die in der Alkylgruppe nicht vicinal sind, können durch ein Sauerstoffatom (-O-) und/oder -CH=CH- substituiert sein; und n ist eine ganze Zahl von 0 bis 20;
R² und R³ sind unabhängig Alkylgruppen mit 1 bis 10 Kohlenstoffatomen, eine oder zwei oder mehr Methylengruppen (-CH₂-), die in den Alkylgruppen nicht vicinal sind, können durch ein Sauerstoffatom (-O-) und/oder -CH=CH- substituiert sein; und A ist eine 1,4-Phenylengruppe, deren Wasserstoffatom(e) in der lateralen Position durch (ein) Fluoratom(e) substituiert sein kann/können;
R⁴ ist eine Alkylgruppe mit 1 bis 10 Kohlenstoffatomen; eine oder zwei oder mehr Methylengruppen (-CH₂-), die in der Alkylgruppe nicht vicinal sind, können durch ein Sauerstoffatom (-O-) und/oder -CH=CH- substituiert sein;
Z⁰ ist -COO- oder -CH₂CH₂-, Z¹ ist -CH₂CH₂-, -COO- oder eine Einfachbindung;
Q¹ ist ein Wasserstoff- oder Fluoratom;
B¹ ist 1,4-Cyclohexylen, 1,4-Phenylen oder 1,3-Dioxan-2,5-diyl;
B² und B³ sind unabhängig eine 1,4-Cyclohexylen- oder 1,4-Phenylengruppe, deren Wasserstoffatom(e) in der lateralen Position durch (ein) Fluoratom(e) substituiert sein kann/können;
p, q und m sind unabhängig 0 oder 1.

2. Flüssigkristall-Zusammensetzung gemäss Anspruch 1, wobei die erste Komponente in einer Menge von 3 bis 60 Gew.%, die zweite Komponente in einer Menge von 3 bis 30 Gew.% und die dritte Komponente in einer Menge von 5 bis 70 Gew.%, bezogen auf das Gesamtgewicht der Zusammensetzung, enthalten ist.

3. Flüssigkristall-Zusammensetzung gemäss Anspruch 1 oder 2, welche weiter eine vierte Komponente umfasst, die mindestens eine Verbindung, ausgewählt aus der Gruppe bestehend aus Verbindungen der Formeln (IV), (V), (VI-a) und (VI-b), umfasst:
R⁵ - (B⁴) - Z² - (C¹) - R⁶ (IV)
worin R⁵ und R⁶ unabhängig Alkylgruppen mit 1 bis 10 Kohlenstoffatomen sind; eine oder zwei oder mehr Methylengruppen (-CH₂-), die in den Alkylgruppen nicht vicinal sind, können durch ein Sauerstoffatom (-O-) und/oder -CH=CH- substituiert sein; B⁴ ist eine 1,4-Cyclohexylen-, Pyrimidin-2,5-diyl- oder 1,4-Phenylengruppe; C¹ ist eine 1,4-Cyclohexylen-oder 1,4-Phenylengruppe; Z² ist -C≡C-, -COO-, -CH₂CH₂-, -CH=CH-, -CF=CF- oder eine Einfachbindung;
R⁷ - (D) - Z³ - (E) - Z⁴ - (G) - R⁸ (V)
worin R⁷ eine Alkylgruppe mit 1 bis 10 Kohlenstoffatomen ist; eine oder zwei oder mehr Methylengruppen (-CH₂-), die in den Alkylgruppen nicht vicinal sind, können durch ein Sauerstoffatom (-O-) und/oder -CH=CH- substituiert sein; R⁸ ist eine Alkyl-, Alkoxy- oder Alkoxymethylgruppe mit 1 bis 10 Kohlenstoffatomen; D ist eine l,4-Cyclohexylen-oder Pyrimidin-2,5-diyl-Gruppe; E ist eine 1,4-Cyclohexylen- oder 1,4-Phenylengruppe, deren Wasserstoffatom(e) in der lateralen Position durch (ein) Fluoratom(e) substituiert sein kann/können; G ist eine 1,4-Cyclohexylen- oder 1,4-Phenylengruppe; Z³ ist -CH₂CH₂- oder eine Einfachbindung; Z⁴ ist -C≡C-, -COO-, -CH=CH- oder eine Einfachbindung; 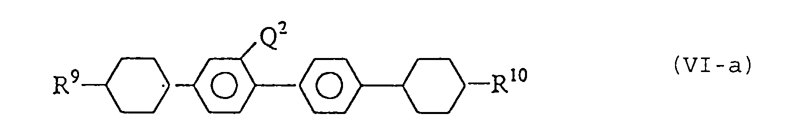 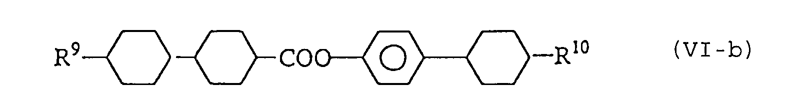 worin R⁹ eine Alkylgruppe mit 1 bis 10 Kohlenstoffatomen ist; eine oder zwei oder mehr Methylengruppen (-CH₂-), die in der Alkylgruppe nicht vicinal sind, können durch ein Sauerstoffatom (-O-) und/oder -CH=CH- substituiert sein; R¹⁰ ist eine Alkyl-, Alkoxy- oder Alkoxymethylgruppe mit 1 bis 10 Kohlenstoffatomen; und Q² ist ein Wasserstoff- oder Fluoratom.

4. Flüssigkristall-Zusammensetzung gemäss Anspruch 3, wobei die vierte Komponente in einer Menge von 0 bis 60 Gew.%, bezogen auf das Gesamtgewicht der Zusammensetzung, enthalten ist.

5. Flüssigkristall-Zusammensetzung gemäss einem der Ansprüche 1 bis 4, welche weiter eine fünfte Komponente umfasst, die mindestens eine Verbindung, ausgewählt aus der Gruppe bestehend aus Verbindungen der Formeln (VII) und (VIII), umfasst: 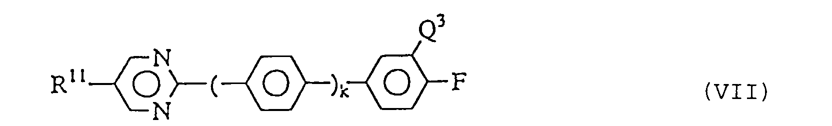 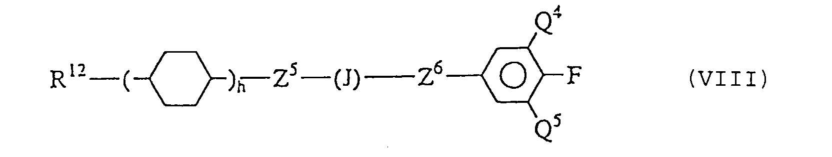 worin R¹¹ eine Alkylgruppe mit 1 bis 10 Kohlenstoffatomen ist; Q³ ist ein Wasserstoff- oder Fluoratom; k ist 0 oder 1; R¹² ist eine Alkylgruppe mit 1 bis 10 Kohlenstoffatomen; J ist eine 1,4-Cyclohexylen- oder 1,4-Phenylengruppe; Q⁴ und Q⁵ sind unabhängig ein Wasserstoff- oder Fluoratom; Z⁵ und Z⁶ sind unabhängig -COO- oder eine Einfachbindung; und h ist 0, 1 oder 2.

6. Flüssigkristall-Zusammensetzung gemäss Anspruch 5, wobei die fünfte Komponente in einer Menge von 0 bis 50 Gew.%, bezogen auf das Gesamtgewicht der Zusammensetzung, enthalten ist.

7. Flüssigkristall-Displayelement, wobei die Flüssigkristall-Zusammensetzung gemäss einem der Ansprüche 1 bis 6 verwendet wird.

8. Flüssigkristall-Displayelement gemäss Anspruch 7, wobei das Element ein STN-Displayelement ist.

## Revendications

1. Composition de cristaux liquides qui comprend un premier composant comprenant au moins un composé choisi parmi le groupe constitué de composés de formules (I-a) à (I-f), in second composant comprenant au mcins un composé de formule (II) et un troisième composant comprenant au moins un composé choisi parmi le groupe constitué de composés de formules (III-a) à (III-c). 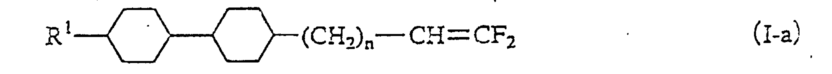 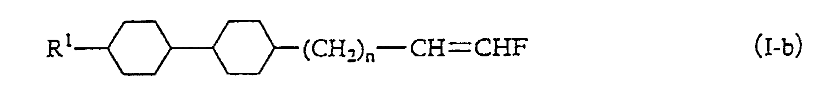 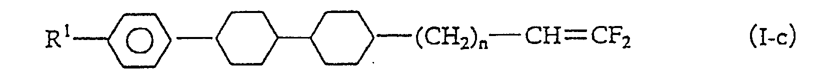 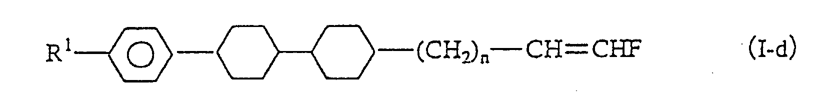 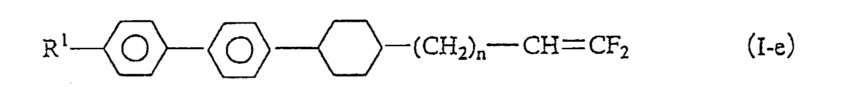 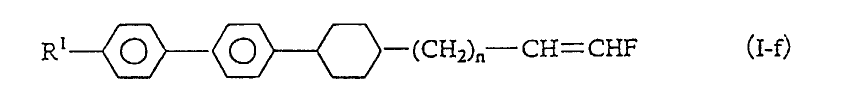 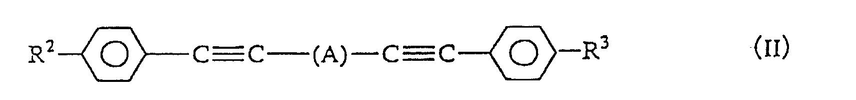 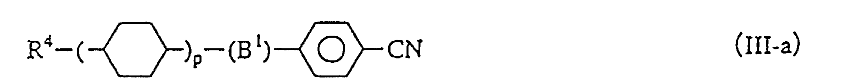 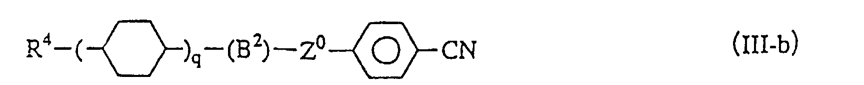 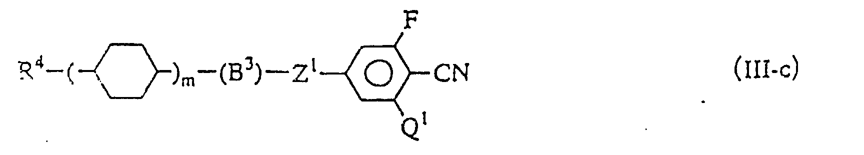 dans lesquelles
R¹ est un groupement alkyle comportant de 1 à 10 atomes de carbone, un ou deux ou plusieurs groupements méthylène (-CH₂-) qui ne sont pas vicinaux dans le groupement alkyle peuvent être substitués par un atome d'oxygène (-O-) et/ou -CH=CH-, et n est un nombre entier de 0 à 20,
R² et R³ sont de façon indépendante des groupements alkyle comportant de 1 à 10 atomes de carbone, un ou deux ou plusieurs groupements méthylène (-CH₂-) qui ne sont pas vicinaux dans les groupements alkyle peuvent être substitués par un atome d'oxygène (-O-) et/ou -CH=CH-, et A est un groupement phénylène-1,4 dont le ou les atomes d'hydrogène en position latérale peuvent être substitués par un ou des atomes de fluor,
R⁴ est un groupement alkyle comportant de 1 à 10 atomes de carbone, un ou deux ou plusieurs groupements méthylène (-CH₂-) qui ne sont pas vicinaux dans le groupement alkyle peuvent être substitués par un atome d'oxygène (-O-) et/ou -CH=CH-,
Z⁰ est -COO- ou -CH₂CH₂-, Z¹ est -CH₂CH₂-, -COO- ou une simple liaison,
Q¹ est un atome d'hydrogène ou de fluor, B¹ est le cyclohexylène-1,4, le phénylène-1,4 ou le dioxane-1,3 diyle-2,5, B² et B³ sont de façon indépendante un groupement cyclohexylène-1,4 ou phénylène-1,4 dont le ou les atomes d'hydrogène en position latérale peuvent être substitués par un ou des atomes de fluor, p, q et m sont de façon indépendante 0 ou 1.

2. Composition de cristaux liquides selon la revendication 1, dans laquelle le premier composant est contenu dans la proportion de 3 à 60 % en poids, le second composant dans la proportion de 3 à 30 % en poids et le troisième composant dans la proportion de 5 à 70 % en poids, sur la base du poids total de la composition.

3. Composition de cristaux liquides selon la revendication 1 ou 2, qui comprend en outre un quatrième composant comprenant au moins un composé choisi parmi le groupe constitué de composés de formules (IV), (V), (VI-a) et (VI-b) :
R⁵ - (B⁴) - Z² - (C¹) - R⁶ (IV)
dans laquelle R⁵ et R⁶ sont de façon indépendante des groupements alkyle comportant de 1 à 10 atomes de carbone, un ou deux ou plusieurs groupements méthylène (-CH2-) qui ne sont pas vicinaux dans les groupements alkyle peuvent être substitués par un atome d'oxygène (-O-) et/ou -CH=CH-, B⁴ est un groupement cyclohexylène-1,4, pyrimidine diyle-2,5 ou phénylène-1,4 C¹ est un groupement cyclohexylène-1,4 ou phènylène-1,4, Z² est -C≡C-, -COO-, -CH₂CH₂-, -CH=CH-, -CF=CF- ou une simple liaison,
R⁷- (D) - Z³ - (E) - Z⁴- (G) - R⁸ (V)
dans laquelle R⁷ est un groupement alkyle comportant de 1 à 10 atomes de carbone, un ou deux ou plusieurs groupements méthylène (-CH₂-) qui ne sont pas vicinaux dans le groupement alkyle peuvent être substitués par un atome d'oxygène (-O-) et/ou -CH=CH-, R⁸ est un groupement alkyle, alcoxy ou alcoxyméthyle comportant de 1 à 10 atomes de carbone, D est un groupement cyclohexylène-1,4 ou pyrimidine diyle-2,5, E est un groupement cyclohexylène-1,4 ou phénylène-1,4 dont le ou les atomes d'hydrogène en position latérale peuvent être substitués par un ou des atomes de fluor, G est un groupement cyclohexylène-1,4 ou phénylène-1,4, Z³ est -CH₂CH₂- ou une simple liaison, Z⁴ est -C≡C-, -COO-, -CH=CH- ou une simple liaison, 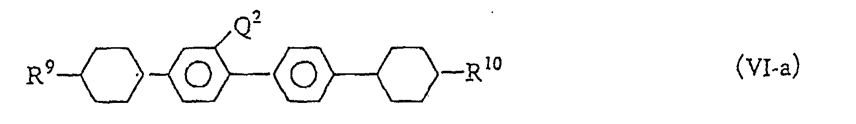 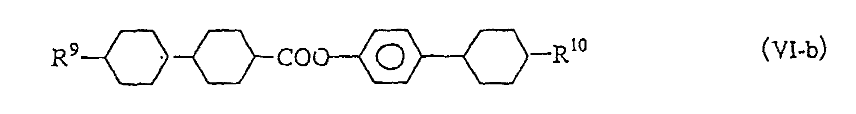 dans lesquelles R⁹ est un groupement alkyle comportant de 1 à 10 atomes de carbone, un ou deux ou plusieurs groupements méthylène (-CH₂-) qui ne sont pas vicinaux dans le groupement alkyle peuvent être substitués par un atome d'oxygène (-O-) et/ou -CH=CH-, R¹⁰ est un groupement alkyle, alcoxy ou alcoxyméthyle comportant de 1 à 10 atomes de carbone, et Q² est un atome d'hydrogène ou de fluor.

4. Composition de cristaux liquides selon la revendication 3, dans laquelle le quatrième composant est contenu dans la proportion de 0 à 60 % en poids sur la base du poids total de la composition.

5. Composition de cristaux liquides selon l'une quelconque des revendications 1 à 4, qui comprend en outre un cinquième composant comprenant au moins un composé choisi parmi le croupe constitué de composés de formules (VII) et (VIII). 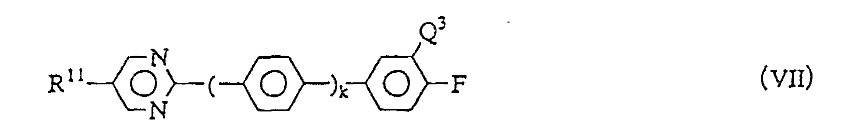 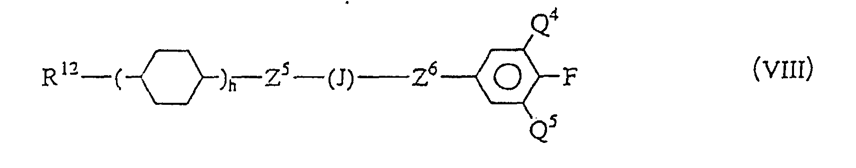 dans lesquelles R¹¹ est un groupement alkyle comportant de 1 à 10 atomes de carbone, Q³ est un atome d'hydrogène ou de fluor, k vaut 0 ou 1, R¹² est un groupement alkyle comportant de 1 à 10 atomes de carbone, J est un groupement cyclohexylène-1,4 ou phénylène-1,4, Q⁴ et Q⁵ sont de façon indépendante un atome d'hydrogène ou de fluor, Z⁵ et Z⁶ sont de façon indépendante -COO- ou une simple liaison, et h vaut 0, 1 ou 2.

6. Composition de cristaux liquides selon la revendication 5, dans laquelle le cinquième composant est contenu dans la proportion de 0 à 50 % en poids sur la base du poids total de la composition.

7. Elément d'affichage à cristaux liquides, dans lequel la composition de cristaux liquides de l'une quelconque des revendications 1 à 6 est utilisée.

8. Elément d'affichage à cristaux liquides selon la revendication 7, dans lequel l'élément est un élément d'affichage nématique supertorsadé (STN).
